# EUROPÄISCHE PATENTSCHRIFT

(11) **EP 4 522 546 B1**
(45) Veröffentlichungstag und Bekanntmachung des Hinweises auf die Patenterteilung: **01.10.2025**
(21) Anmeldenummer: 23724161.7
(22) Anmeldetag: 08.05.2023
(51) Int. Cl.: B66C 13/08, B66C 23/42, B66C 1/68, B66C 3/20, B66C 23/46, B66C 23/48, B66C 23/00

(54) **VERFAHREN ZUM BEWEGEN EINER HEBEVORRICHTUNG**
METHOD FOR MOVING A LIFTING DEVICE
PROCÉDÉ DE DÉPLACEMENT D'UN DISPOSITIF DE LEVAGE

(30) Priorität: 13.05.2022 AT 5008322 U
(43) Veröffentlichungstag der Anmeldung: 19.03.2025
(73) Patentinhaber: Palfinger AG, 5101 Bergheim bei Salzburg (AT)
(72) Erfinder: DEIMER, Thomas, 5141 Moosdorf (AT); GFRERER, David, 5700 Zell am See (AT)
(74) Vertreter: Torggler & Hofmann Patentanwälte - Innsbruck
(86) Internationale Anmeldenummer: PCT/AT2023/060150
(87) Internationale Veröffentlichungsnummer: WO 2023/215925

(56) Entgegenhaltungen:
- EP-A1- 3 839 675
- WO-A1-2018/068071
- WO-A1-2019/136505

## Beschreibung

Die vorliegende Erfindung betrifft ein Verfahren zum Bewegen einer Hebevorrichtung gemäß dem Oberbegriff des Anspruchs 1, ein Computerprogrammprodukt zur Ausführung eines solchen Verfahrens, ein Datenträgersignal zum Übertragen eines solchen Computerprogrammprodukts, eine Steuerung zum Durchführen eines solchen Verfahrens und eine Hebevorrichtung mit einer solchen Steuerung.

Im Stand der Technik sind Verfahren zum Bewegen einer Hebevorrichtung bekannt.

Bei herkömmlichen Verfahren zum Bewegen einer Hebevorrichtung werden von einem Benutzer die einzelnen Aktuatoren des Armsystems einer Hebevorrichtung einzeln durch von diesem über eine Benutzerschnittstelle einer Steuerung generierten Steuerbefehlen direkt angesteuert. Eine Bewegung des Armsystems ergibt sich dabei aus den einzelnen durch den Benutzer gesteuerten Stellbewegungen. Bei der Bewegung des Armsystems in eine gewünschte Zielposition, die mit einer dabei gegebenen Geometrie des Armsystems verknüpft ist, müssen ausgehend von einer vorherrschenden, von der gewünschten Position abweichenden Stellung, durch den Benutzer gezielte Stellbewegungen vorgenommen werden. Dies ist nachteilig mit einer hohen Arbeitsbelastung für den Benutzer und hohen Zeitaufwand durch allfällige Korrekturen der Geometrie des Armsystems bei einer Annäherung an die Zielposition verbunden.

Auch sind Verfahren zum Bewegen einer Hebevorrichtung bekannt, bei welchen eine Koordinatensteuerung des Armsystems erfolgt. Dabei werden die einzelnen Aktuatoren des Armsystems von der Steuerung so angesteuert, dass der Benutzer das Verhalten der Kranspitze des Armsystems anstelle der einzelnen Aktuatoren selbst ansteuert. Dabei können bei jeder Vorgabe einer Bahn, welcher die Kranspitze bei einer Koordinatensteuerung folgen soll, unendlich viele Bahnen, welchen die Arme des Armsystems entlang der entsprechenden Freiheitsgrade folgen sollen, möglich sein. Wird beispielsweise die Kranspitze oder eine aufgenommene Last wiederholt entlang einer Bahn bewegt, kann das Armsystem während den Bewegungen und in der Endlage unterschiedlichste Geometrien annehmen. Dieselbe Position der Kranspitze kann für unterschiedlichste Stellungen des Armsystems gegeben sein. Insbesondere für überbestimmte Armsysteme mit redundanten Freiheitsgraden der Bewegung kann die zur Umsetzung einer Koordinatensteuerung nötige Erzeugung von Steuerbefehlen einen hohen Rechenaufwand einer Steuerung darstellen. Auch können bei der Bewegung eines koordinatengesteuerten Armsystems für einen Benutzer unvorhersehbare Geometrieänderungen des Armsystems auftreten.

Ein gattungsgemäßes Verfahren zum Bewegen einer Hebevorrichtung ist aus WO2019/136505 bekannt.

Aufgabe der Erfindung ist es, ein verbessertes Verfahren zum Bewegen einer Hebevorrichtung, sowie ein Computerprogrammprodukt zur Ausführung eines solchen Verfahrens, ein Datenträgersignal zum Übertragen eines solchen Computerprogrammprodukts, eine Steuerung zum Durchführen eines solchen Verfahrens und eine Hebevorrichtung mit einer solchen Steuerung anzugeben, welche die zuvor genannten Nachteile nicht aufweisen. Insbesondere soll für einen Benutzer die Bewegung des Armsystems in einer intuitiv vorhersehbaren Weise erfolgen und in der jeweiligen Endlage der Bewegung das Armsystem eine im Wesentlichen vorbestimmte oder vorbestimmbare Geometrie aufweisen können.

Diese Aufgabe wird durch ein Verfahren zum Bewegen einer Hebevorrichtung mit den Merkmalen des Anspruchs 1, ein Computerprogrammprodukt zur Ausführung eines solchen Verfahrens, ein Datenträgersignal zum Übertragen eines solchen Computerprogrammprodukts, eine Steuerung zum Durchführen eines solchen Verfahrens und eine Hebevorrichtung mit einer solchen Steuerung gelöst.

Vorteilhafte Ausführungsformen der Erfindung sind in den abhängigen Ansprüchen definiert.

Das erfindungsgemäße Verfahren ist zum Bewegen einer Hebevorrichtung geeignet. Die Hebevorrichtung kann beispielsweise in Form eines Krans, eines Ladekrans oder einer Hubarbeitsbühne in Form eines Krans mit daran angeordnetem Arbeitskorb ausgebildet sein.

Die Hebevorrichtung kann ein Armsystem mit Armen mit einer veränderbaren Geometrie aufweisen, wobei Arme des Armsystem zueinander durch zumindest einen Aktuator entlang von zumindest einem Freiheitsgrad bewegbar sein können.

Die Bewegungen entlang eines Freiheitsgrades kann durch einen mit dem Freiheitsgrad korrespondierenden Aktuator erfolgen. Beispielsweise können zwei schwenkbar aneinander gelagerte Arme durch einen Aktuator relativ zueinander verschwenkt werden. Zwei verschiebbar zueinander gelagert Arme können beispielsweise durch einen Aktuator relativ zueinander verschoben werden.

Ein Bewegen der Hebevorrichtung kann durch eine im Wesentlichen freie Ansteuerung von Aktuatoren durch Abgabe von Bedienbefehlen durch einen Benutzer, vorzugsweise über eine geeignete Benutzerschnittstelle, erfolgen. Dabei können beispielsweise einzelne Aktuatoren der Hebevorrichtung gezielt auf Basis von Bedienbefehlen eines Benutzers durch korrespondierende Steuerbefehle angesteuert werden.

Die Freiheitsgrade des Armsystems können grundsätzlich Winkel von Armen des Armsystems zueinander und Längen von längenveränderbaren Armen umfassen.

In einer Vorgabephase kann die Hebevorrichtung für die Vorgabe zumindest einer Zielposition für die Hebevorrichtung durch eine Ansteuerung von Aktuatoren in zumindest eine Zielposition gebracht werden. Die Aktuatoren können dabei durch Abgabe von Bedienbefehlen durch einen Benutzer, vorzugsweise über eine geeignete Benutzerschnittstelle, mit entsprechenden Steuerbefehlen angesteuert werden. Zumindest eine Zielposition kann damit beispielsweise durch direktes Anfahren der Position mit dem Armsystem erfolgen. Die Aktuatoren können grundsätzlich in Form von hydraulischen Zylindern oder entsprechenden elektrischen Antrieben ausgebildet sein.

Steuerbefehle können grundsätzlich in Form von Steuerpulsen mit einer Amplitude und einer Signaldauer durch die Steuerung ausgegeben werden, wobei durch Steuerpulse beispielsweise elektrische Antriebe geschaltet und/oder Ventile für die Hydraulikversorgung von Aktuatoren der Hebevorrichtung steuerbar sein können.

In der zumindest einen vorgegebenen Zielposition kann eine Erfassung der dabei vorherrschenden momentanen Geometrie des Armsystems auf Basis des zumindest einen Freiheitsgrades erfolgen.

Alternativ oder in Kombination kann in einer Vorgabephase eine Vorgabe zumindest einer Zielposition für die Hebevorrichtung durch eine Angabe der Geometrie des Armsystems in zumindest einer Zielposition auf Basis des zumindest einen Freiheitsgrades über eine Benutzerschnittstelle der Steuerung erfolgen. Durch einen Benutzer kann mittels einer Benutzerschnittstelle der Steuerung ein Hinterlegen oder Programmieren zumindest einer Zielposition auf Basis des zumindest einen Freiheitsgrades erfolgen, wobei ein direktes Anfahren der Position mit dem Armsystem dabei nicht notwendig sein muss.

Es ist denkbar, dass in einer Vorgabephase die Hebevorrichtung durch eine Ansteuerung von Aktuatoren in eine weitere Zielposition gebracht wird und eine weitere Erfassung der dabei vorherrschenden momentanen Geometrie des Armsystems auf Basis des zumindest einen Freiheitsgrades erfolgt. Es ist allgemein möglich, dass in einer Vorgabephase für mehrere Zielpositionen die jeweils momentane Geometrie des Armsystems auf Basis des zumindest einen Freiheitsgrades erfolgt.

Eine Vorgabephase kann grundsätzlich beliebig oft und zu einem beliebigen Zeitpunkt während des Betriebs der Hebevorrichtung erfolgen.

Bei einer Vorgabe der Geometrie und/oder einer Erfassung der momentanen Geometrie des Armsystems können grundsätzlich Werte zu allen Freiheitsgraden des Armsystems vorgegeben und/oder erfasst werden. Damit kann sich die momentane Geometrie des Armsystems, gegebenenfalls unter Einbeziehung von hinterlegten Daten zur Konfiguration des Armsystems, im Wesentlichen vollständig bestimmen lassen.

Es soll nicht ausgeschlossen sein, dass bei einer Vorgabe durch eine Angabe der Geometrie des Armsystems in zumindest einer Zielposition auf Basis des zumindest einen Freiheitsgrades über eine Benutzerschnittstelle der Steuerung Werte zu ausgewählten Freiheitsgraden des Armsystems vorgebbar sind.

Unter der momentanen Geometrie des Armsystem kann die jeweils aktuell vorherrschenden Geometrie des Armsystems verstanden werden.

In einer Messphase kann eine Erfassung der momentanen Geometrie des Armsystems auf Basis des zumindest einen Freiheitsgrades erfolgen. Dabei kann die Hebevorrichtung nach Durchführung der oder einer Vorgabephase, beispielsweise durch eine Ansteuerung von Aktuatoren, in eine von der zumindest einen ersten Zielposition abweichende, vorzugsweise im Wesentlichen frei wählbare Stellung gebracht worden sein.

Eine Erfassung der momentanen Geometrie des Armsystems auf Basis des zumindest einen Freiheitsgrades kann in einer Messphase gesondert von einer Erfassung der Geometrie in einer Vorgabephase erfolgen.

Eine Messphase kann grundsätzlich mehrmalig und zu einem beliebigen Zeitpunkt innerhalb des Verfahrens durchgeführt werden. Es ist denkbar, dass eine Messphase zyklisch, insbesondere periodisch durchgeführt wird. Eine Messphase kann beispielsweise bei einer, vorzugsweise bei jeder, Änderung der Geometrie des Armsystems durchgeführt werden.

In einer Auswahlphase kann eine Auswahl zumindest einer in der Vorgabephase vorgegebenen Zielposition erfolgen. Es kann vorgesehen sein, dass durch das Verfahren die Hebevorrichtung in die zumindest eine in der Auswahlphase ausgewählte Zielposition bewegt oder an diese angenähert wird.

Eine Auswahl der zumindest einen Zielposition kann durch einen Benutzer über eine Benutzerschnittstelle der Steuerung erfolgen.

Es soll nicht ausgeschlossen sein, dass die zuletzt in einer Vorgabephase vorgegebene Zielposition die gegenwärtig ausgewählte Zielposition ist.

Die Durchführung der Auswahlphase kann grundsätzlich unabhängig von der Messphase erfolgen. So kann beispielsweise die Auswahl zumindest einer Zielposition in einer Auswahlphase vor oder nach Durchführung einer Messphase erfolgen.

In einer auf eine Messphase und die Auswahlphase folgenden Vergleichsphase kann durch einen Vergleich der jeweiligen Geometrien des Armsystems auf Basis des zumindest einen Freiheitsgrades eine Geometrieabweichung zwischen der Geometrie der in der Auswahlphase ausgewählten zumindest einen Zielposition und der in der Messphase erfassten momentanen Geometrie bestimmt werden.

Die Geometrieabweichung kann grundsätzlich durch unterschiedliche Geometrien des Armsystems, also beispielsweise durch unterschiedliche Schwenkstellungen und/oder Schubstellungen von zueinander bewegbaren Armen des Armsystems, in der Vorgabephase - entsprechend einer in der Auswahlphase ausgewählten zumindest einen Zielposition - und der Messphase bestehen. Unterschiedliche Geometrien können auf Basis des zumindest einen Freiheitsgrades verglichen werden.

Eine Geometrieabweichung kann auf Basis des zumindest einen Freiheitsgrades qualitativ und quantitativ bestimmbar sein.

Eine Bewegungen kann grundsätzlich entlang eines Freiheitsgrads durch einen mit dem Freiheitsgrad korrespondierenden Aktuator erfolgen. Eine auf Basis von zumindest einem Freiheitsgrad bestimmte Geometrieabweichung kann einem zu dem jeweiligen Freiheitsgrad gehörenden Aktuator zugeordnet werden.

Eine Messphase kann grundsätzlich beliebig oft und zu einem beliebigen Zeitpunkt während des Betriebs der Hebevorrichtung erfolgen.

In einer auf die oder eine Vergleichsphase folgende Erzeugungsphase kann auf Basis der in der Vergleichsphase bestimmten Geometrieabweichung zumindest ein Steuerbefehl für die Ansteuerung zumindest eines der Aktuatoren der Hebevorrichtung erzeugt werden. Mit dem zumindest einen Steuerbefehl kann durch Ansteuerung zumindest eines der Aktuatoren eine Annäherung oder zumindest teilweisen Überführung des Armsystems der Hebevorrichtung von der in der Messphase erfassten Geometrie in die Geometrie der in der Auswahlphase ausgewählten zumindest einen Zielposition erfolgen.

Der zumindest eine Steuerbefehl kann zur Annäherung oder Überführung des Armsystems der Hebevorrichtung von der in der Messphase erfassten Geometrie in eine innerhalb eines vorgebbaren oder vorgegebenen Toleranzbereichs an die Geometrie der in der Auswahlphase ausgewählten zumindest einen Zielposition angenäherte Geometrie erzeugt werden.

Die mit dem zumindest einen Steuerbefehl umsetzbare Bewegung des Armsystems entlang des zumindest einen Freiheitsgrades kann die Geometrie des Armsystems innerhalb eines Toleranzbereichs der Geometrie der in der Auswahlphase ausgewählten zumindest einen Zielposition annähern. Dabei kann ein Toleranzbereich für zumindest einen Freiheitsgrad vorgegebenen oder vorgebbaren sein.

Der Toleranzbereich kann in Abhängigkeit von verschiedenen Betriebsparametern der Hebevorrichtung wie beispielsweise Temperatur, Ausladung und/oder Momentenbelastung des Armsystems, Masse einer aufgenommenen Last oder Neigung der Hebevorrichtung vorgebbar sein. Insbesondere kann die Steuerung unter Einbeziehung von Sensordaten einen entsprechenden Toleranzbereich berechnen und vorgeben. Eine Vorgabe durch einen Benutzer, beispielsweise für einzelne oder mehrere Freiheitgrade des Armsystem, ist ebenso denkbar.

Eine in einer Vergleichsphase bestimmte Geometrieabweichung kann mit dem zumindest einen Steuerbefehl innerhalb eines vorgegebenen oder vorgebbaren Toleranzbereichs kompensiert werden.

Bei einer Ansteuerung zumindest eines der Aktuatoren mit dem zumindest einen in der Erzeugungsphase erzeugten Steuerbefehl kann eine in der Vergleichsphase bestimmte Geometrieabweichung zur zumindest einen ersten Zielposition, oder auch zu einer weiteren Zielposition, minimiert werden.

Dadurch, dass mit dem erfindungsgemäßen Verfahren die Steuerbefehle auf Basis einer Geometrieabweichung erzeugbar sind, kann das Armsystem der Hebevorrichtung in einer Zielposition im Wesentlichen die in einer Vorgabephase angegebene und/oder erfasste Geometrie aufweisen. Dies unterscheidet sich zu Verfahren, bei welchen eine Zielposition durch die Position einer Kranspitze des Armsystems charakterisiert wird und bei einer Bewegung der Hebevorrichtung in eine solche Zielposition die Geometrie des Armsystems von der bei der Vorgabe der Zielposition bestehenden Geometrie abweichen kann.

Ein solches Ansteuern kann in einer Ansteuerungsphase erfolgen. Dabei kann ein zumindest teilweises Bewegen der Hebevorrichtung in die ausgewählte Zielposition durch ein Ansteuern der Aktuatoren des Armsystems mit dem zumindest einen in der Erzeugungsphase erzeugten Steuerbefehl erfolgen.

Bei einem mehrmaligen Durchführen der Abfolge der Messphase, der Vergleichsphase, der Erzeugungsphase und der Ansteuerungsphase kann eine iterative Annäherung - gegebenenfalls innerhalb eines Toleranzbereichs - der Geometrie des Armsystems an die Geometrie der in der Auswahlphase ausgewählten zumindest einen Zielposition erfolgen.

Insbesondere kann bei einem mehrmaligen Durchführen der Abfolge der Messphase, der Vergleichsphase, der Erzeugungsphase und der Ansteuerungsphase eine Regelung der Bewegung des Armsystems erreicht werden. Dabei können die tatsächlich mit den erzeugten und ausgegebenen Steuerbefehlen umgesetzten Bewegung und der resultierenden Geometrieänderung des Armsystems eines Durchgangs in der Erzeugungsphase und der Ansteuerungsphase in einem weiteren Durchgang berücksichtigt werden.

Durch eine solche Rückkopplung können beispielweise Abweichungen von Betriebsparametern wie der Temperatur, der Reibung oder auch der Auslastung der Hebevorrichtung zwischen der Vorgabephase und der Messphase kompensiert werden.

Es soll nicht ausgeschlossen sein, dass die Hebevorrichtung durch das Verfahren zwischen unterschiedlichen Zielpositionen, auswählbar in einer Auswahlphase, bewegt wird. So kann beispielsweise nach Erreichen der zumindest einen Zielposition die Hebevorrichtung durch ein Ansteuern der Aktuatoren des Armsystems mit zumindest einem in einer weiteren Erzeugungsphase erzeugten Steuerbefehl in eine zweite Zielposition bewegt werden. Dabei kann nach Erreichen der Zielposition eine Messphase durchgeführt werden, auf Basis welcher eine Geometrieabweichung zu einer zweiten Zielposition bestimmbar ist. Ein Erreichen einer Zielposition kann innerhalb eines vorgegebenen oder vorgebbaren Toleranzbereichs erfolgen.

Es soll nicht ausgeschlossen sein, dass während der Durchführung des Verfahrens von einem Benutzer manuelle Korrekturen an der Geometrie des Armsystems vorgenommen werden, wobei die Steuerung dazu einen geeigneten Betriebsmodus aufweisen kann. Manuelle Korrekturen können in einer darauffolgenden Messphase erfasst und bei der Erzeugung von Steuerbefehlen in einer Erzeugungsphase berücksichtigt werden.

Auf Basis einer Geometrieabweichung kann grundsätzlich für jeden Freiheitsgrad, für den eine Abweichung bestimmt wird, ein Steuerbefehl erzeugt werden.

Aufgrund der hohen Komplexität der Geometrie mancher Armsysteme, welche beispielsweise eine Kransäule, einen schwenkbar an der Kransäule angeordneten Hauptarm (auch als Hubarm bezeichnet) und einen schwenkbar am Hauptarm angeordneten Knickarm mit einem verschiebbar in diesem gelagerten Schubarm umfassen können, kann das Armsystem eine Vielzahl an Freiheitsgraden besitzen. Im Stand der Technik sind solche Armsysteme beispielsweise als redundante oder überbestimmte Manipulatoren bekannt.

Der Überschuss an Beweglichkeit durch die Überbestimmtheit des Armsystems kann eine Bewegung zwischen zwei unterschiedlichen Geometrien auf unterschiedlichen Wegen, also in anderen Worten durch unterschiedliche Bewegungen, erfolgen.

Von einem Prozessor oder einer Recheneinheit einer Steuerung kann zur Erzeugung entsprechender Steuerbefehle für eine Bewegung eine sogenannte Rückwärtstransformation oder kinematische Umkehr durchgeführt werden. Um eine eindeutige Lösung für eine solche Rückwärtstransformation für ein überbestimmtes Armsystem zu erlangen, muss die Rückwärtstransformation zur Generierung von Steuerbefehlen für das Armsystem unter Einbeziehung von Optimierungskriterien (wie beispielsweise sogenannten Kostfunktionen mit Gewichtungsmatrizen) und gegebenenfalls mit Näherrungen erfolgen und ist mit hohem Rechenaufwand verbunden.

Eine besonders einfache Erzeugung von Steuerbefehlen kann durch eine direkte Bestimmung der Geometrieabweichung zwischen zwei bekannten Geometrien, also zwischen zumindest einer vorgebbaren Zielposition und einer in einer Messphase bestimmten Geometrie, erfolgen. Aus der auf Basis des zumindest einen Freiheitsgrades bestimmten Geometrieabweichung kann direkt zumindest ein Steuerbefehl für zumindest einen mit dem jeweiligen Freiheitsgrad korrespondierenden Aktuator erzeugt werden. Dadurch kann eine eindeutige Lösung für eine Rückwärtstransformation berechenbar sein.

Insbesondere können in der Erzeugungsphase nur für Aktuatoren Steuerbefehle erzeugt werden, für welche in der Vergleichsphase eine Geometrieabweichung entlang des mit dem Aktuator korrespondierenden zumindest einen Freiheitsgrads bestimmt wird. Eine auf Basis von zumindest einem Freiheitsgrad bestimmte Geometrieabweichung kann einem zu dem jeweiligen Freiheitsgrad gehörenden Aktuator zugeordnet werden, wodurch sich die für die Bewegung in die zumindest eine Zielposition beteiligten Aktuatoren bestimmen lassen können. Ein Ansteuern eines Aktuators in einer Ansteuerungsphase kann vorteilhaft nur erfolgen, wenn in der Vergleichsphase eine Abweichung entlang dem entsprechenden Freiheitsgrad bestimmt wird.

Die sich nach der Bewegung ergebende Armstellung, also die Geometrie des Armsystems, kann nach einer Durchführung der Ansteuerungsphase, gegebenenfalls wie zuvor beschrieben nach wiederholter Durchführung, im Wesentlichen mit der Armstellung des Armsystems bei Durchführung der Vorgabephase identisch sein. Die Geometrien der Armstellungen können einander innerhalb eines vorgegebenen oder vorgebbaren Toleranzbereichs entsprechen.

Im Betrieb der Hebevorrichtung kann es mit dem Verfahren möglich sein, mehrere verschiedene Zielpositionen hintereinander anzufahren. Durch die auf der Geometrieabweichung gegenüber einer Zielposition basierende Ansteuerung kann eine Vermeidung von Kollisionen durch eine vorhersehbare Bewegung des Armsystems erreicht werden. Ein Benutzer kann beispielsweise durch eine gezielte Vorgabe einer Abfolge an Zielpositionen einen Verlauf der Bewegungen zur Geometrieänderung des Armsystems vorgeben.

Dadurch kann ein Hin- und Herbewegen zwischen zwei oder mehreren Zielpositionen über eine oder mehrere definierte Zwischenpositionen ermöglicht werden. Vorteilhaft ist dabei auch, dass nicht Informationen zur gesamten Bahnkurve in einem Speicher der Steuerung hinterlegt werden müssen, sondern lediglich die als Zwischenpositionen dienenden Zielpositionen.

Die zumindest eine Zielposition kann allgemein einer durch eine Ansteuerung von Aktuatoren im Wesentlichen frei wählbaren Stellung der Hebevorrichtung entsprechen. Die Geometrie des Armsystems kann für die zumindest eine Zielposition innerhalb der konstruktiv vorgegebenen Bereiche der Freiheitsgrade des Armsystems im Wesentlichen frei wählbar sein.

Die in der Messphase erfasste momentane Geometrie der Hebevorrichtung kann einer von einer in der Vorgabephase vorgegebenen Zielposition und von einer in der Auswahlphase ausgewählten Zielposition abweichenden Geometrie des Armsystems entsprechen. Die Geometrie des Armsystems kann für die Messphase innerhalb der konstruktiv vorgegebenen Bereiche der Freiheitsgrade des Armsystems im Wesentlichen frei wählbar, etwa durch eine Ansteuerung von Aktuatoren, sein.

Die Erfassung einer momentanen Geometrie kann grundsätzlich auf Basis von Sensordaten von an der Hebevorrichtung angeordneten Sensoren zur Winkelmessung und/oder Längenmessung erfolgen. Grundsätzlich können Sensordaten zu allen Freiheitsgraden des Armsystems erfasst werden. Die Sensordaten können beispielsweise bei einer quantitativen Bestimmung von Schwenkstellungen und/oder Schubstellungen von zueinander bewegbaren Armen des Armsystems erfasst werden. Auch kann eine Winkelmessung eines Neigungswinkels der Hebevorrichtung erfolgen.

Bei der Erfassung der momentanen Geometrie des Armsystems und/oder der Angabe der Geometrie des Armsystems über eine Benutzerschnittstelle der Steuerung kann auf Basis eines Rechenmodells eine Bestimmung einer Durchbiegung des Armsystems erfolgen.

Eine Durchbiegung des Armsystems kann durch die Eigenmomente der Arme des Armsystems bestehen. Eine Auslastung der Hebevorrichtung, beispielweise durch eine aufgenommene Last und/oder ein angeordnetes Zusatzgerät, kann eine zusätzliche Durchbiegung des Armsystems bewirken.

Eine Durchbiegung kann grundsätzlich auf Basis einer Geometrie des Armsystems und/oder einer Auslastung der Hebevorrichtung bestimmt werden.

Ein entsprechendes Rechenmodell kann in einem Speicher der Steuerung hinterlegt sein. Eine in einer bestimmten Stellung bestehende Durchbiegung kann auf Basis eines Rechenmodells unter Einbeziehung zumindest eines angegebenen und/oder erfassten Freiheitsgrads der Bewegbarkeit des Armsystems und/oder einer Auslastung der Hebevorrichtung erfolgen.

Bei einer Erfassung der momentanen Geometrie des Armsystems in einer Zielposition in einer Vorgabephase kann auf Basis eines Rechenmodells eine bestehende Durchbiegung des Armsystems bestimmt werden.

Bei einer Angabe der Geometrie des Armsystems über eine Benutzerschnittstelle der Steuerung für eine Zielposition in einer Vorgabephase kann auf Basis eines Rechenmodells eine zu erwartende Durchbiegung des Armsystems bestimmt werden.

Die Geometrie des Armsystems kann zusätzlich zu den Freiheitsgraden des Armsystems, welche grundsätzlich Winkel von Armen des Armsystems zueinander und Längen von längenveränderbaren Armen umfassen können, mit in einem Rechenmodell bestimmten Durchbiegungen von Armen des Armsystems charakterisiert werden.

Eine zu erwartende oder bestehende Durchbiegung des Armsystems kann in einem entsprechenden Rechenmodell für unterschiedliche Auslastungen der Hebevorrichtung in einer Vorgabephase und einer Messphase bestimmbar sein. Unterschiedliche Auslastungen der Hebevorrichtung können sich etwa durch unterschiedliche aufgenommene Lasten und unterschiedliche Geometrien des Armsystems ergeben. Eine Auslastung des Hebesystems kann auf eine im Stand der Technik bekannte Weise erfolgen, beispielsweise über geeignete Lastsensoren oder unter Einbeziehung von Hydraulikdrücken in entsprechend ausgebildeten Aktuatoren.

Durch Berücksichtigung von auf Basis eines Rechenmodells bestimmten Durchbiegungen von Armen des Armsystems - unter Einbeziehung von angegebenen oder erfassten Geometrien und gegebenenfalls Auslastungen des Armsystems - kann grundsätzlich eine genauere Annäherung der Geometrie des Armsystems an die Geometrie der in der Auswahlphase ausgewählten zumindest einen Zielposition erfolgen.

Bei der Erfassung der momentanen Geometrie des Armsystems und/oder der Angabe der Geometrie des Armsystems über eine Benutzerschnittstelle der Steuerung kann eine Erfassung einer Neigung der Hebevorrichtung relativ zu einer vorgegebenen oder vorgebbaren Raumrichtung, beispielsweise einer Horizontale oder einer Vertikale, erfolgen.

Die Geometrie des Armsystems kann zusätzlich zu den Freiheitsgraden des Armsystems, welche grundsätzlich Winkel von Armen des Armsystems zueinander und Längen von längenveränderbaren Armen umfassen können, durch eine erfasste Neigung der Hebevorrichtung charakterisiert werden.

Durch eine Erfassung der Neigung und ein Einbeziehen in ein entsprechendes Rechenmodell kann eine Kompensation einer Geometrieabweichung zwischen einer gegenwärtig vorherrschenden Geometrie und der Geometrie einer in der Auswahlphase ausgewählten zumindest einen Zielposition erfolgen.

Mit einem entsprechenden Rechenmodell kann eine genauere Annäherung der Geometrie des Armsystems an die Geometrie der in der Auswahlphase ausgewählten zumindest einen Zielposition unter Berücksichtigung der gegenwärtig vorherrschenden Neigung der Hebevorrichtung erfolgen.

Bei der Erfassung der momentanen Geometrie des Armsystems und/oder der Angabe der Geometrie des Armsystems über eine Benutzerschnittstelle der Steuerung kann eine Erfassung einer Stellung zumindest eines Zusatzgeräts relativ zum Armsystem der Hebevorrichtung erfolgen. Ein am Armsystem angeordnetes oder anordenbares Zusatzgerät kann in Form eines Arbeitsgeräts und/oder einer Armverlängerung, vorzugsweise einer statischen und ggf. unter einem vorgebbaren Winkel anordenbaren Armverlängerung, und/oder einem Arbeitskorb ausgebildet sein. In einem Speicher der Steuerung können Informationen zum Funktionsumfang, Dimensionsangaben und Winkelstellungen eines Zusatzgeräts niederlegt sein.

Zusätzlich oder alternativ kann eine insbesondere Sensor-basierte Geometrieerfassung des zumindest einen Zusatzgeräts auf Basis zumindest eines Freiheitsgrad der Geometrie des Zusatzgerätes, beispielsweise veränderbare Abstände oder Winkel von bewegbaren Teilen des Zusatzgerätes, erfolgen.

Die erfasste Stellung und/oder Geometrie des zumindest eines Zusatzgeräts relativ zum Armsystem der Hebevorrichtung kann in der Vergleichsphase in die Bestimmung einer Geometrieabweichung einbezogen werden.

In einer vorteilhaften Ausführung des Verfahrens kann in der Vorgabephase eine Angabe und/oder Erfassung zumindest eines Werts zumindest eines Freiheitsgrades von zueinander entlang des zumindest einen Freiheitsgrades bewegbaren Armen des Armsystems erfolgen. In der Messphase kann vorteilhaft eine wiederholte Erfassung zumindest eines Werts zumindest eines Freiheitsgrads erfolgen, und in der Vergleichsphase kann in Folge die Bestimmung der Geometrieabweichung durch Bestimmung einer Abweichung des zumindest einen entsprechend in der Auswahlphase ausgewählten und in der Vorgabephase angegebenen und/oder erfassten Werts zu dem zumindest einen in der Messphase erfassten Werts erfolgen.

Der zumindest eine in der Erzeugungsphase erzeugte Steuerbefehl kann grundsätzlich Informationen zu einem anzusteuernden Aktuator umfassen. Bei Bestimmung der Geometrieabweichung kann ein zu einem gegenüber einer Zielposition abweichenden Freiheitsgrad zugehörige Aktuator identifiziert und diesem Aktuator ein Steuerbefehl zugeordnet werden. Der Steuerbefehl kann weiter eine nominale Signaldauer zur Dauer der Ansteuerung umfassen.

Eine nominale Signaldauer kann grundsätzlich in Abhängigkeit von der erreichbaren Änderungsrate der Geometrieänderung bei Ansteuerung des korrespondierenden Aktuators vorgebbar sein. Eine nominale Signaldauer kann ein Richtwert für die Ansteuerungsdauer des korrespondierenden Aktuators sein und als Basis zum Vergleich unterschiedlicher Steuerbefehle dienen.

Es soll nicht ausgeschlossen sein, dass die in der Ansteuerungsphase umgesetzte Signaldauer in Abhängigkeit von weiteren Steuerbefehlen und/oder Bedienbefehlen und/oder konstruktiven Gegebenheiten der Hebevorrichtung variierbar ist. Insbesondere kann die jeweilige umgesetzte Signaldauer auch noch in der Ansteuerungsphase variiert werden.

In einer vorteilhaften Ausführung des Verfahrens können in der Erzeugungsphase zumindest zwei Steuerbefehle erzeugt werden und ein Ansteuern der Aktuatoren in der Ansteuerungsphase mit den zumindest zwei in der Erzeugungsphase erzeugten Steuerbefehlen grundsätzlich zumindest teilweise sequenziell und/oder zumindest teilweise gleichzeitig erfolgen.

Eine teilweise sequenzielle und/oder zumindest teilweise gleichzeitige Ansteuerung kann in unterschiedlichen Ausführungen nach unterschiedlichen Kriterien erfolgen.

Eine Ansteuerung von Aktuatoren kann beispielsweise zumindest teilweise sequenziell nach der Größe der Geometrieänderung bei Ansteuerung eines Aktuators der angesteuerten Aktuatoren geordnet erfolgen. Dabei können große Änderungen der Geometrie des Armsystems in der Ansteuerungsphase zuerst erfolgen.

Alternativ oder in Kombination kann eine Ansteuerung von Aktuatoren zumindest teilweise sequenziell nach der Größe der Verringerung der Ausladung des Armsystems bei Ansteuerung eines Aktuators der angesteuerten Aktuatoren geordnet erfolgen. Dabei können Änderungen der Geometrie, bei welchen es zu einer Verringerung des auf die Hebevorrichtung wirkenden Lastmoments, welches grundsätzlich mit der Ausladung des Armsystems zusammenhängen kann, kommt, in der Ansteuerungsphase zuerst erfolgen

Alternativ oder in Kombination kann eine Ansteuerung von Aktuatoren zumindest teilweise nach einer Kostenfunktion geordnet erfolgen. Solche an sich im Stand der Technik bekannten Kostenfunktionen können beispielsweise zu einer energie- oder zeitoptimierten Bewegung des Armsystems beitragen.

Alternativ oder in Kombination kann eine Ansteuerung von Aktuatoren zumindest teilweise gleichzeitig erfolgen, wobei eine jeweilige Signaldauer der zumindest zwei Steuerbefehle an die größte nominale Signaldauer der Steuerbefehle angeglichen wird. Die Signaldauer unterschiedlicher Steuerbefehle für unterschiedliche Aktuatoren kann auf die Signaldauer des Steuerbefehls mit der bei Erzeugung des Steuerbefehls größten nominalen Signaldauer skaliert werden. Eine Amplitude und damit eine Änderungsrate der Bewegung des korrespondierenden Aktuators kann entsprechend der geänderten Signaldauer skaliert werden. So kann erreicht werden, dass bei einer zumindest teilweise gleichzeitigen Ansteuerung von mehreren Aktuatoren die für die Zielposition vorgegebene Endstellung von allen beteiligten Aktuatoren im Wesentlichen gleichzeitig erreicht wird.

Ein Ansteuern der Aktuatoren kann grundsätzlich zumindest teilweise sequenziell und/oder zumindest teilweise gleichzeitig erfolgen. Eine Ansteuerung von unterschiedlichen Aktuatoren kann mit einem zeitlichen Überlapp erfolgen.

Es soll nicht ausgeschlossen sein, dass die Ausgabe der Steuerbefehle für die bei der Bewegung in die zumindest eine Zielposition beteiligten Aktuatoren durch einen Benutzer gesteuert erfolgt. Es kann also möglich sein, dass die für die Bewegung in die zumindest eine Zielposition nötigen Steuerbefehle in der Erzeugungsphase erzeugt werden und die Ausgabe in der Ansteuerungsphase durch einen Benutzer steuerbar ist.

In der Vorgabephase kann die Hebevorrichtung vorteilhaft mit von einem Benutzer über eine Steuerung generierten Steuerbefehlen für eine Ansteuerung von Aktuatoren im Wesentlichen frei bewegbar sein. Dies kann einer konventionellen Steuerung der Hebevorrichtung entsprechen, bei welcher die Aktuatoren des Armsystems von einem Benutzer bzw. Bediener durch von diesen generierten Steuerbefehlen direkt angesteuert werden, wodurch sich die Bewegung des Armsystems aus den einzelnen durch den Benutzer gesteuerten Stellbewegungen ergibt. In der Ansteuerungsphase kann vorteilhaft eine Bewegung der Hebevorrichtung durch zumindest einen von einer Steuerung in der Erzeugungsphase erzeugten Steuerbefehl erfolgen. Im Unterschied zu einer Ansteuerung in der Vorgabephase kann dabei eine Bewegung der des Armsystems ohne eine komplexe Generierung von einzelnen Steuerbefehlen durch den Benutzer erfolgen. Die Steuerbefehle können von einer Steuerung generiert und zumindest teilautomatisiert ausgegeben werden. Es ist somit nicht nötig, dass von einem Benutzer für einzelne Aktuatoren jeweils für den jeweiligen Aktuator bestimmte Steuerbefehle generiert werden. Vorteilhaft kann in der Ansteuerungsphase ein Bewegen der Hebevorrichtung durch Ausgabe des zumindest einen in der Erzeugungsphase erzeugten Steuerbefehls durch eine Steuerung zumindest teilautomatisiert erfolgen.

Ein zumindest teilautomatisiertes Bewegen kann durch eine Ansteuerung von Aktuatoren durch Abgabe von Steuerbefehlen, die in Abhängigkeit von bestimmten Vorgaben von einer Steuerung der Hebevorrichtung generiert und zumindest teilweise automatisch von einer Steuerung an die Aktuatoren ausgegeben werden, erfolgen. Dabei können einzelne oder mehrere Aktuatoren durch eine Steuerung, gegebenenfalls in Abhängigkeit eines Bedienbefehls eines Benutzers, mit von der Steuerung generierten Steuerbefehlen angesteuert werden.

Schutz wird auch begehrt für ein Computerprogrammprodukt gemäß Anspruch 18.

Auch wird Schutz begehrt für ein Datenträgersignal, welches das zuvor beschriebene Computerprogrammprodukt überträgt.

Schutz wird auch begehrt für eine Steuerung für eine Hebevorrichtung, vorzugsweise für einen Ladekran oder eine Hubarbeitsbühne, die zur Durchführung eines wie zuvor beschriebenen Verfahrens zum Bewegen einer Hebevorrichtung ausgebildet ist.

Von der Steuerung kann in einem ersten Betriebsmodus die Vorgabephase zur Vorgabe zumindest einer Zielposition durch eine Ansteuerung von Aktuatoren und zur ersten Erfassung der momentanen Geometrie des Armsystems auf Basis zumindest eines Freiheitsgrades durchführbar sein. Dabei können beispielsweise bei der Geometrieerfassung erfasste Sensordaten zu Freiheitsgraden von an der Hebevorrichtung anordenbaren oder angeordneten Sensoren, beispielsweise repräsentiert durch Werte von Freiheitsgraden, in einem Speicher der Steuerung gespeichert werden. Alternativ oder in Kombination kann eine Angabe der Geometrie des Armsystems in zumindest einer Zielposition auf Basis des zumindest einen Freiheitsgrades über eine Benutzerschnittstelle der Steuerung erfolgen. Dabei können beispielsweise Werte von Freiheitsgraden durch einen Benutzer über eine Benutzerschnittstelle der Steuerung eingegeben und in einem Speicher der Steuerung gespeichert werden. In einem ersten Betriebsmodus der Steuerung kann also in der Vorgabephase zumindest eine Zielposition in einem Speicher der Steuerung gespeichert werden.

In einem zweiten Betriebsmodus der Steuerung kann die Messphase zur wiederholten Erfassung der momentanen Geometrie des Armsystems auf Basis zumindest eines Freiheitsgrades durchführbar sein. Dabei können beispielsweise wieder bei der Geometrieerfassung erfasste Sensordaten zu Freiheitsgraden von an der Hebevorrichtung anordenbaren oder angeordneten Sensoren, beispielsweise repräsentiert durch Werte von Freiheitsgraden, in einem Speicher der Steuerung gespeichert werden. Es ist denkbar, dass die Steuerung wiederholt in den zweiten Betriebsmodus wechselt und eine Messphase durchführt. Ein Wechsel in den zweiten Betriebsmodus und eine Durchführung einer Messphase kann zyklisch, insbesondere periodisch erfolgen.

Insbesondere kann dies bei einer, vorzugsweise jeder, Änderung der Geometrie des Armsystems erfolgen.

In einem dritten Betriebsmodus kann die Auswahlphase zur Auswahl zumindest einer in der Vorgabephase vorgegebenen Zielposition durchführbar sein. Eine Auswahl der zumindest einen Zielposition kann durch einen Benutzer über eine Benutzerschnittstelle der Steuerung erfolgen. Dabei kann zumindest eine in einem Speicher hinterlegte Zielposition beispielsweise über eine Benutzerschnittstelle der Steuerung auswählbar sein.

In einem vierten Betriebsmodus kann die Vergleichsphase zur Bestimmung der Geometrieabweichung auf Basis zumindest eines Freiheitsgrades zwischen der Geometrie der in der Auswahlphase ausgewählten zumindest einen Zielposition und der in der Messphase erfassten momentanen Geometrie durchführbar sein. Die Vergleichsphase kann mit einer dazu konfigurierten Recheneinheit der Steuerung durchführbar sein, wobei die Recheneinheit der Steuerung mit dem Speicher der Steuerung in einer datenleitenden Verbindung steht oder in eine solche bringbar ist. Die bestimmte Geometrieabweichung kann, beispielsweise repräsentiert durch Werte zu Abweichungen von Freiheitsgraden, in einem Speicher der Steuerung gespeichert werden.

In einem fünften Betriebsmodus kann die Erzeugungsphase zur Erzeugung zumindest eines Steuerbefehls für die Ansteuerung zumindest eines der Aktuatoren der Hebevorrichtung zur Annäherung oder zumindest teilweisen Überführung des Armsystems der Hebevorrichtung von der in der Messphase erfassten Geometrie in die Geometrie der in der Auswahlphase ausgewählten zumindest einen Zielposition mit einer dazu konfigurierten Recheneinheit der Steuerung durchführbar sein. Die erzeugten Steuerbefehle können beispielsweise Informationen zu einem der anzusteuernden Aktuatoren und eine Signaldauer zur Dauer der Ansteuerung umfassen und in einem Speicher der Steuerung gespeichert werden.

In einem sechsten Betriebsmodus kann die Ansteuerungsphase zum Ansteuern der Aktuatoren des Armsystems der Hebevorrichtung durch Ausgabe des zumindest einen in der Erzeugungsphase erzeugten Steuerbefehls durch die Steuerung durchführbar sein. Dabei können die Steuerbefehle aus einem Speicher der Steuerung ausgelesen werden und über eine geeignete Schnittstelle zur Ansteuerung der jeweiligen Aktuatoren ausgegeben werden.

Bei einem wie bereits beschriebenen mehrmaligen Durchführen der Abfolge der Messphase, der Vergleichsphase, der Erzeugungsphase und der Ansteuerungsphase - mit dem damit einhergehenden Wechsel in den entsprechenden Betriebsmodus - kann vorteilhaft eine iterative Annäherung der Geometrie des Armsystems an die Geometrie der ausgewählten zumindest einen Zielposition erfolgen.

Die Steuerung kann grundsätzlich eine Benutzerschnittstelle aufweisen, mittels welcher ein Benutzer durch Abgabe von Bedienbefehlen Steuerbefehle für Aktuatoren generieren kann. Die Benutzerschnittstelle kann Bedienelemente beispielsweise in Form von Schaltern, Druckknöpfen, Bedienhebeln, Joysticks und/oder einem berührungsempfindlichen Bildschirm ausgebildet sein.

In einer vorteilhaften Ausführung der Steuerung kann im sechsten Betriebsmodus zum Ansteuern der Aktuatoren zumindest ein Bedienelement einer Benutzerschnittstelle aktiviert werden und durch Betätigung des zumindest einen Bedienelements durch einen Benutzer die Geometrie des Armsystems zumindest teilautomatisiert durch die Steuerung veränderbar sein.

Eine Bewegung des Armsystems durch die auf Basis der Geometrieabweichung erzeugten Steuerbefehle, wobei die Bewegung mehrere Aktuatoren umfassen kann, kann in dieser Ausführung im Wesentlichen durch Betätigung eines einzelnen Bedienelements oder auch mehreren Bedienelementen erfolgen. Unterschiedliche Freiheitsgrade oder Gruppen von Freiheitsgraden der Bewegung können beispielsweise unterschiedlichen Bedienelementen zuordenbar sein.

Ein Ansteuern der Aktuatoren kann vollautomatisiert oder teilautomatisiert durch Betätigung zumindest eines Bedienelements einer Benutzerschnittstelle der Steuerung erfolgen.

In einer vorteilhaften Ausführung können über eine Benutzerschnittstelle der Steuerung Informationen, vorzugsweise Informationen zum Funktionsumfang und/oder Dimensionsangaben und/oder Winkelstellungen, zu zumindest einem Zusatzgerät in einem Speicher der Steuerung hinterlegbar sein., Die Informationen können beispielsweise aus einer in einem Speicher der Steuerung hinterlegten Datenbank auswählbar sein und/oder über eine Benutzerschnittstelle, vorzugsweise über eine Einstellmaske, eingebbar sein.

Die Steuerung kann ein, vorzugsweise tragbares, Steuerpult aufweisen, wobei die Benutzerschnittstelle an dem Steuerpult ausgebildet sein kann.

Insbesondere kann die Benutzerschnittstelle menügeführt sein und/oder zumindest ein Bedienelement der Steuerung umfassen.

Vorzugsweise kann die Steuerung eine Änderungsrate der Geometrie des Armsystems, also in anderen Worten eine Geschwindigkeit der Bewegung, in Abhängigkeit zu einer Betätigung des zumindest einen Bedienelements der Benutzerschnittstelle, insbesondere in Abhängigkeit zu einer Auslenkung bei der Ausbildung des Bedienelements in Form eines Bedienelements, steuern.

Schutz wird auch begehrt für eine Hebevorrichtung, insbesondere einen Ladekran oder eine Hubarbeitsbühne, mit einem mehrere durch Aktuatoren bewegbare Arme aufweisenden Armsystem, wobei das Armsystem wenigstens aufweist:
- eine mit einem ersten Aktuator um eine Drehachse drehbare Kransäule, wobei das Armsystem durch die verschwenkbare Lagerung der Kransäule einen ersten Freiheitsgrad (φ) aufweist,
- einen mit einem zweiten Aktuator relativ zur Kransäule schwenkbaren Hauptarm, wobei das Armsystem durch verschwenkbare Lagerung des Hauptarms einen zweiten Freiheitsgrad (α) aufweist

Die Hebevorrichtung kann eine wie zuvor beschriebene Steuerung aufweisen, mit welcher zur Veränderung der Geometrie des Armsystems Steuerbefehle an Aktuatoren des Armsystems ausgebbar sind, wobei durch die Steuerung auf Basis von am Armsystem verbauten Sensoren eine momentane Geometrie des Armsystems auf Basis der Freiheitsgrade der Hebevorrichtung erfassbar sein kann.

In einer vorteilhaften Ausbildung der Hebevorrichtung kann diese wenigstens weiter die folgenden Arme aufweisen:
- einen mit einem dritten Aktuator relativ zum Hauptarm schwenkbaren Knickarm, wobei das Armsystem durch die verschwenkbare Lagerung des Knickarms einen dritten Freiheitsgrad aufweist
- zumindest einen im Knickarm mit einem vierten Aktuator verschiebbar gelagerten Schubarm, wobei das Armsystem durch verschiebbare Lagerung das Schubarms einen vierten Freiheitsgrad aufweist

Eine solche Ausführung der Hebevorrichtung kann beispielsweise für einen Ladekran oder einen Kran mit daran angeordnetem Arbeitskorb gegeben sein.

In weiteren Ausführungen der Hebevorrichtung können ein zweiter Knickarm und/oder ein Zusatzarbeitsgerät beispielsweise in Form einer Gabel, eines Rotator oder eines Greifers am Armsystem angeordnet sein.

Eine wie zuvor beschriebene Hebevorrichtung kann auf einem Fahrzeug montiert werden. Damit kann eine Ausführung einer mobile Hebevorrichtung erreicht werden.

Ausführungsbeispiele der Erfindung werden beispielhaft anhand der Figuren diskutiert. Es zeigen:
- Fig. 1a bis 1c: Seitenansichten verschiedener Ausführungen einer auf einem Fahrzeug montierten Hebevorrichtung,
- Fig. 2a bis 2c: Seitenansichten verschiedener Ausführungen einer Hebevorrichtung,
- Fig. 3a bis 3e: Seitenansichten zu Freiheitsgraden der Bewegung von unterschiedlichen Armen verschiedener Armsysteme,
- Fig. 4: einer Ausführung einer Hebevorrichtung mit einem längenveränderbaren Hauptarm,
- Fig. 5a und 5b: zwei Ausführungen von am Armsystem anordenbaren Zusatzgeräten,
- Fig. 6a bis 6c: Seitenansichten verschiedener Ausführungen einer Hebevorrichtung und jeweils eine schematische Darstellung einer Steuerung mit Sensorik,
- Fig. 7a und 7b: schematische Ausführungen einer Hebevorrichtung in verschiedenen Stellungen des Armsystems,
- Fig. 8a und 8b: schematische Ausführungen einer Hebevorrichtung zur Illustration einer Durchbiegung eines Arms und einer Neigung der Hebevorrichtung gegenüber der Horizontalen,
- Fig. 9a und 9b: die Anzeige einer Steuerungen einer vorgeschlagenen Hebevorrichtung und ein Steuerpult der Steuerung gemäß Figur 9a,
- Fig. 10a bis 10d: Ausführungen von Benutzerschnittstellen, und
- Fig. 11a bis 11c: schematische Darstellungen von Steuerbefehlen in Form von Steuerpulsen.

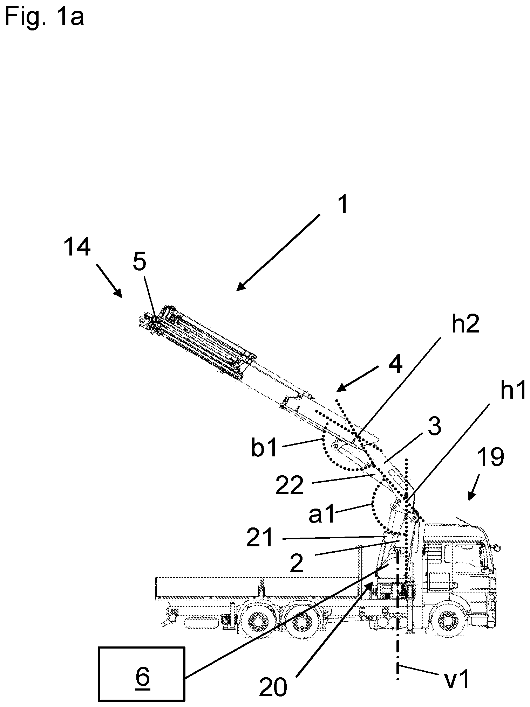

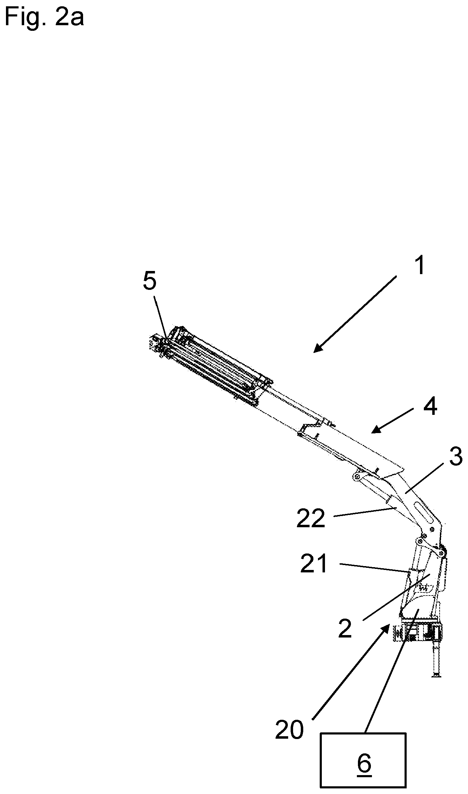

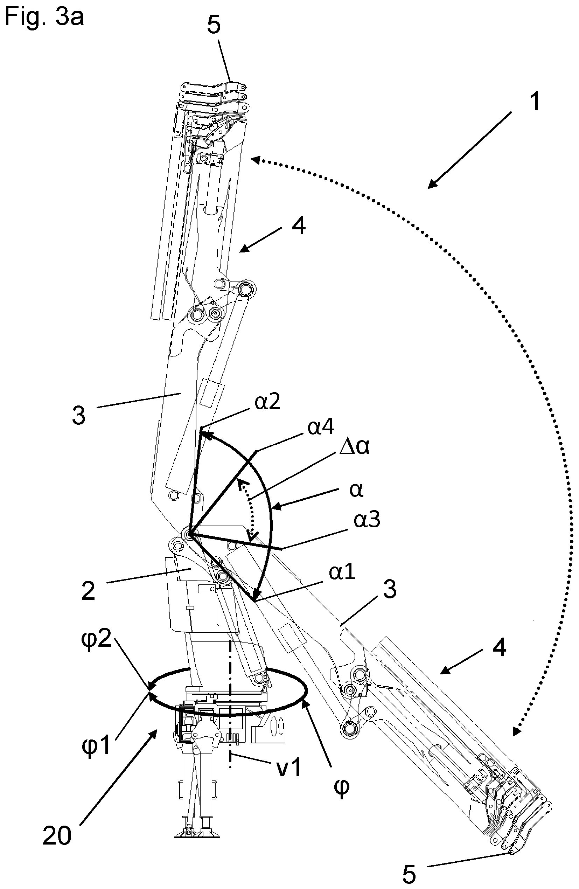

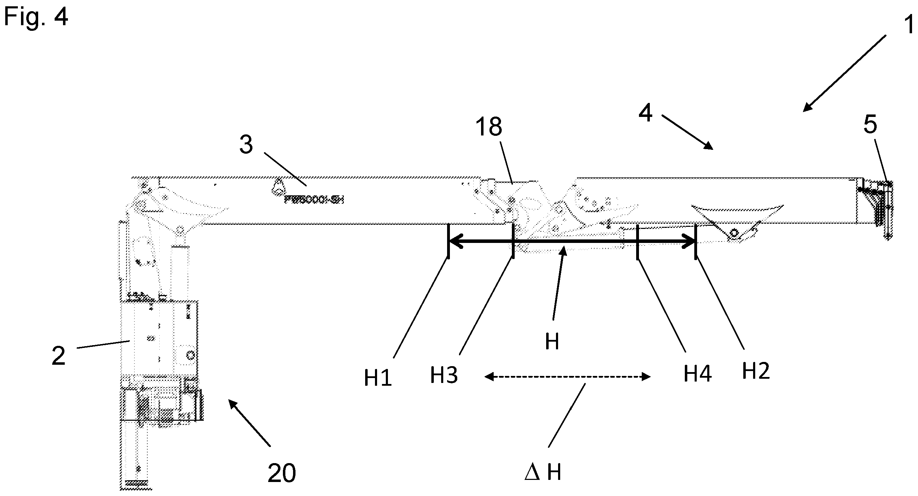

In den Figuren 1a bis 1c sind Seitenansichten verschiedener Ausführungen einer auf einem Fahrzeug 19 montierten Hebevorrichtung 1 gezeigt. Die Figuren 2a bis 2c zeigen die Hebevorrichtungen 1 der Figuren 1a bis 1c in Isolation. Die Freiheitsgrade α, β, φ, γ, L, J, H der Bewegung der einzelnen Arme 2, 3, 4, 5, 7, 8, 24 der verschiedenen Armsysteme der Hebevorrichtungen 1 sind in den Figuren 3a bis 3e und in Figur 4 illustriert.

In Figur 1a ist eine erste Ausführung einer vorgeschlagenen Hebevorrichtung 1 gezeigt, wobei die Hebevorrichtung 1 als Ladekran bzw. Knickarmkran ausgebildet ist und auf einem Fahrzeug 19 angeordnet ist. Die Hebevorrichtung 1 weist wie gezeigt eine um eine erste vertikale Achse v1 mittels eines Drehwerks 20 drehbare Kransäule 2, einen um eine erste horizontale Schwenkachse h1 schwenkbar an der Kransäule 2 gelagerten Hauptarm 3 und einen um eine zweite horizontale Schwenkachse h2 schwenkbar am Hauptarm 3 gelagerten Knickarm 4 mit zumindest einem Schubarm 5 auf. Zum Verschwenken des Hauptarms 3 relativ zur Kransäule 2 (dargestellte Knickwinkelstellung a1 des Freiheitsgrads α) ist ein hydraulischer Hauptzylinder 21 vorgesehen. Zum Verschwenken des Knickarms 4 relativ zum Hauptarm 3 (dargestellte Knickwinkelstellung b1 des Freiheitsgrads β) ist ein hydraulischer Knickzylinder 22 vorgesehen. In dieser Ausführung der Hebevorrichtung 1 kann die Kranspitze 14 von der Spitze des Schubarms 5 ausgebildet sein.

Die Aktuatoren können grundsätzlich in Form von hydraulischen Zylindern oder entsprechenden elektrischen Antrieben vorliegen.

Das Armsystem der gezeigten Hebevorrichtung 1 weist demnach eine Kransäule 2, einen Hauptarm 3, einen Knickarm 4 und zumindest einen Schubarm 5 auf.

Die Hebevorrichtung 1 weist eine schematisch dargestellte Steuerung 6 auf, die zur Durchführung eines erfindungsgemäßen Verfahrens zum Bewegen einer Hebevorrichtung 1 ausgebildet ist.

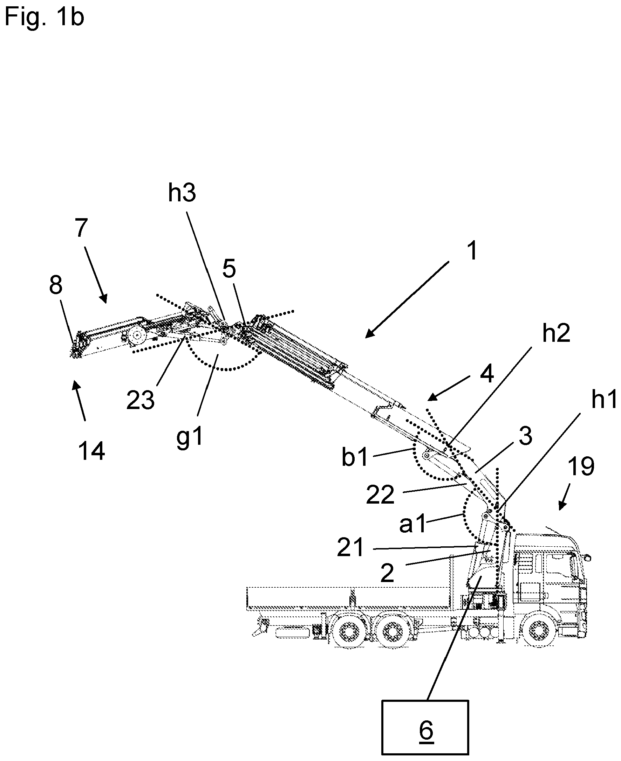

In Figur 1b ist eine zweite Ausführung einer vorgeschlagenen Hebevorrichtung 1 gezeigt, wobei die darin gezeigte Hebevorrichtung 1 zusätzlich zur Ausstattung der in Figur 1a gezeigten Ausführung einen um eine dritte horizontale Schwenkachse h3 schwenkbar am Schubarm 5 des Knickarms 4 angeordneten zweiten Knickarm 7 mit einem darin gelagerten zweiten Schubarm 8 aufweist. Zum Verschwenken des zweiten Knickarms 7 relativ zum Knickarm 4 (dargestellte Knickwinkelstellung g1 des Freiheitsgrads γ) ist ein Knickzylinder 23 vorgesehen. In dieser Ausführung der Hebevorrichtung 1 kann die Kranspitze 14 von der Spitze des Schubarms 8 ausgebildet sein.

Das Armsystem der in Figur 1b gezeigten Hebevorrichtung 1 weist demnach eine Kransäule 2, einen Hauptarm 3, einen Knickarm 4 mit zumindest einem Schubarm 5, sowie einen zweiten Knickarm 7 mit zumindest einem Schubarm 8 auf.

Analog zur Ausführung der Figur 1b kann die in Figur 1b gezeigte Hebevorrichtung 1 eine hier nur schematisch dargestellte Steuerung 6 aufweisen, die zur Durchführung eines erfindungsgemäßen Verfahrens zum Bewegen einer Hebevorrichtung 1 ausgebildet ist.

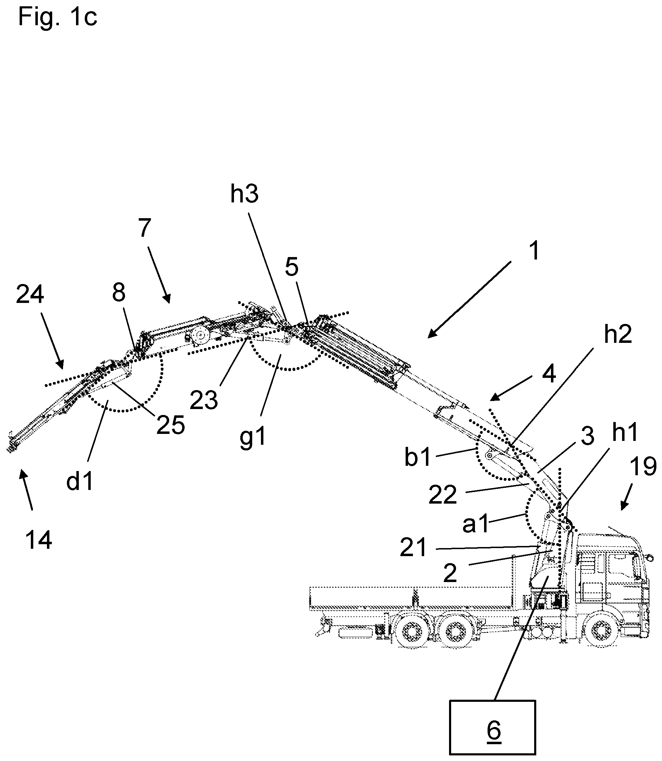

In Figur 1c ist eine dritte Ausführung einer vorgeschlagenen Hebevorrichtung 1 gezeigt, wobei die darin gezeigte Hebevorrichtung 1 zusätzlich zur Konfiguration der in Figur 1b gezeigten Ausführung einen weiteren um eine vierte horizontale Schwenkachse a4 schwenkbar am zweiten Schubarm 8 des zweiten Knickarms 7 angebrachten weiteren Knickarm 24 aufweist. Zum Verschwenken des weiteren Knickarms 24 relativ zum zweiten Knickarm 7 (dargestellte Knickwinkelstellung d1 des Freiheitsgrads der Schwenkbewegung des weiteren Knickarms 24) ist ein Knickzylinder 25 vorgesehen. In dieser Ausführung der Hebevorrichtung 1 kann die Kranspitze 14 von der Spitze des weiteren Knickarms 24 ausgebildet sein.

Das Armsystem der in Figur 1c gezeigten Hebevorrichtung 1 weist demnach eine Kransäule 2, einen Hauptarm 3, einen Knickarm 4 mit zumindest einem Schubarm 5, einen zweiten Knickarm 7 mit zumindest einem Schubarm 8, sowie einen weiteren Knickarm 24 (der gegebenenfalls längenveränderbar ausgebildet sein kann) auf.

Analog zu den Ausführungen der Figuren 1a und 1b kann die in Figur 1c gezeigte Hebevorrichtung 1 eine schematisch dargestellte Steuerung 6 aufweisen, die zur Durchführung eines erfindungsgemäßen Verfahrens zum Bewegen einer Hebevorrichtung 1 ausgebildet ist.

Alle gezeigten Ausführungen können selbstverständlich ein Drehwerk 20 aufweisen.

In den Figuren 2a bis 2c ist jeweils eine Detailansicht einer gemäß den Figuren 1a bis 1c ausgebildeten Hebevorrichtung 1 gezeigt.

In den Figuren 3a bis 3e sind in Seitenansichten die Freiheitsgrade α, β, φ, γ, L, J der Bewegung unterschiedlicher Arme verschiedener Armsysteme illustriert.

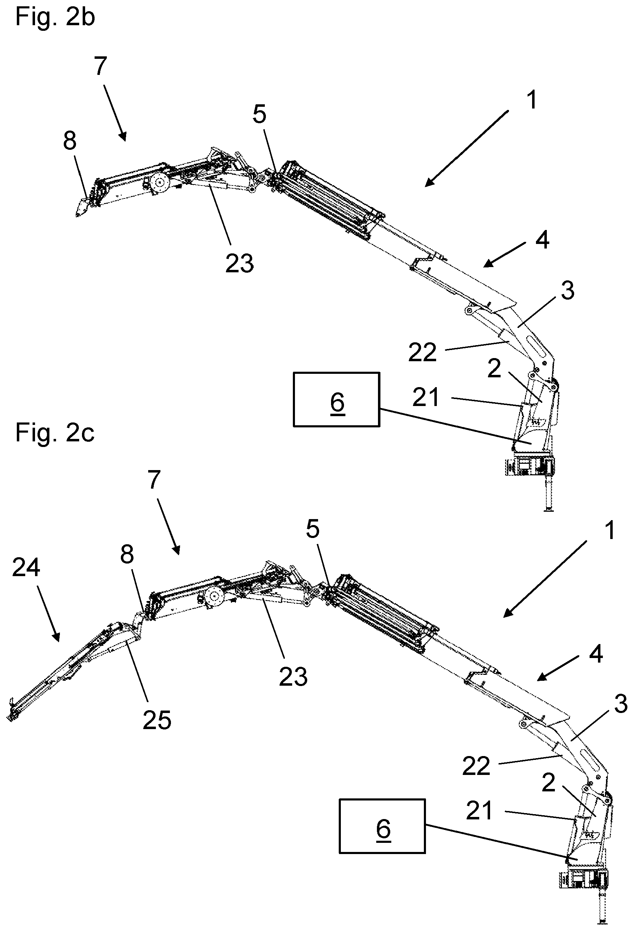

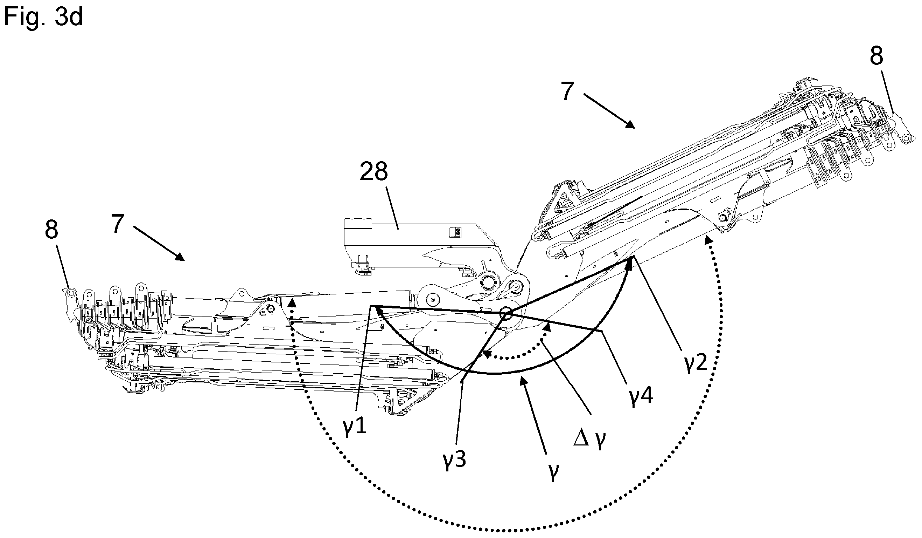

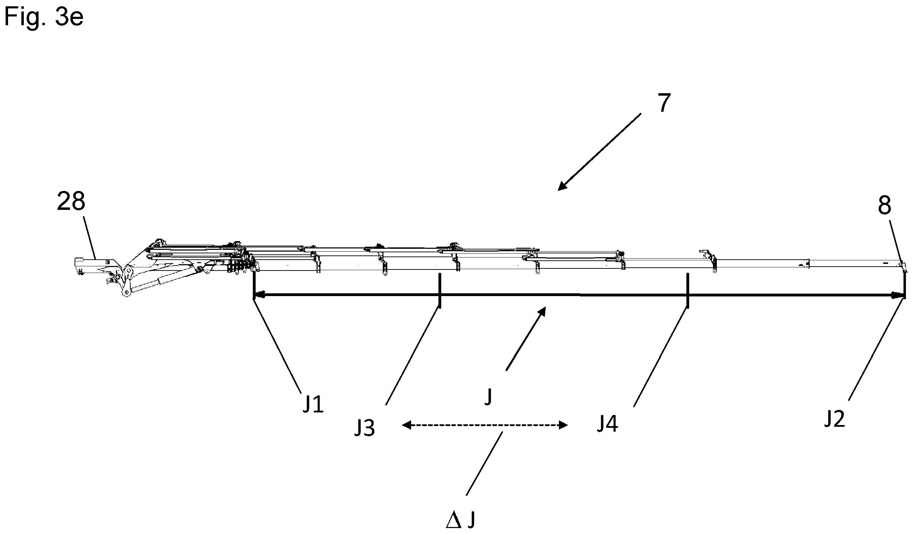

Die in den Figuren 3a bis 3c gezeigte Hebevorrichtung 1 entspricht in der Ausführung jener der Figuren 1a und 2a. Der in den Figuren 3d und 3e gezeigte Knickarm 7 entspricht jenem der in den Figuren 1b und 2b zweiten Knickarme 7. Der weitere Knickarm 24 der Figuren 1c und 2c kann ebenso entsprechend dem in den Figuren 3d und 3e gezeigten Knickarm 7 ausgebildet sein.

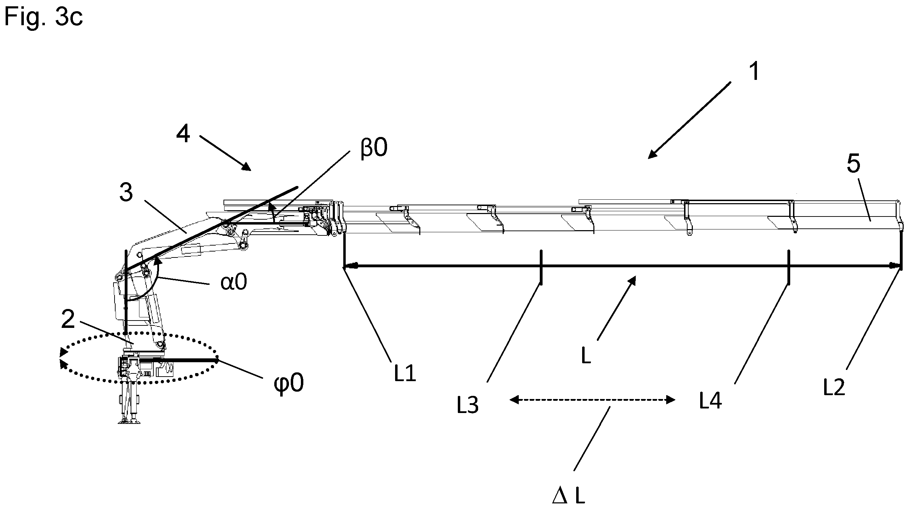

Mit Bezugnahme auf Figur 3a bis 3c ist die um die Drehachse in Form der ersten vertikalen Achse v1 drehbare Kransäule 2 über einen konstruktiv vorgegebenen Kransäulen-Schwenkbereich φ1 - φ2 verschwenkbar gelagert und weist durch ihre verschwenkbare Lagerung einen Freiheitsgrad φ auf (Figur 3c zeigt den Wert der Schwenkstellung φ0 des Freiheitsgrads φ). Es ist denkbar, dass sich der Kransäulen-Schwenkbereich über ein Intervall von 0° bis 360° erstreckt, also die Kransäule endlos schwenkbar ausgebildet ist. Der Hauptarm 3 ist an der Kransäule 2 über einen konstruktiv vorgegebenen Hauptarm-Schwenkbereich α1 - α2 verschwenkbar gelagert und weist durch seine verschwenkbare Lagerung einen Freiheitsgrad α auf (Figur 3c zeigt den Wert der Schwenkstellung α0 des Freiheitsgrads α). Der Knickarm 4 ist am Hauptarm 3 über einen konstruktiv vorgegebenen Knickarm-Schwenkbereich β1 - β2 verschwenkbar gelagert und weist durch seine verschwenkbare Lagerung einen Freiheitsgrad β auf. Der Schubarm 5 ist im Knickarm 4 über einen konstruktiv vorgegebenen Schubbereich L1 - L2 verschiebbar gelagert und weist durch seine verschiebbare Lagerung einen Freiheitsgrad L auf.

In den Figuren 3d und 3e ist ein Knickarm 7 in Isolation gezeigt, welcher über einen Verbindungsbereich 28 am Schubarm 5 der Hebevorrichtung 1 der Figuren 3a bis 3c über einen konstruktiv vorgegebenen zweiten Knickarm-Schwenkbereich γ1 -γ2 verschwenkbar lagerbar ist und durch eine verschwenkbare Lagerung einen Freiheitsgrad γ aufweist, und welcher zumindest einen zweiten Schubarm 8 umfasst, welcher im zweiten Knickarm 7 über einen konstruktiv vorgegebenen zweiten Schubarm-Schubbereich J1 - J2 verschiebbar gelagert ist und durch seine verschiebbare Lagerung einen Freiheitsgrad J aufweist.

In Figur 4 ist eine Ausführung einer Hebevorrichtung 1 gezeigt, dessen Armsystem im Unterschied zu den zuvor diskutierten Ausführungen zusätzlich zumindest einen Hauptarm-Schubarm 18 aufweisen, welcher im Hauptarm 3 über einen konstruktiv vorgegebenen (und lediglich schematisch dargestellten) Schubbereich H1 - H2 verschiebbar gelagert ist und durch seine verschiebbare Lagerung einen Freiheitsgrad H aufweist.

Das Armsystem der in Figur 4 gezeigten Hebevorrichtung 1 weist demnach eine Kransäule 2, einen Hauptarm 3 mit zumindest einem Hauptarm-Schubarm 18, einen Knickarm 4 mit zumindest einem Schubarm 5 auf.

Analog zu den zuvor diskutierten Ausführungen kann die in Figur 4 gezeigte Hebevorrichtung 1 eine schematisch dargestellte Steuerung 6 aufweisen, die zur Durchführung eines erfindungsgemäßen Verfahrens zum Bewegen einer Hebevorrichtung 1 ausgebildet ist.

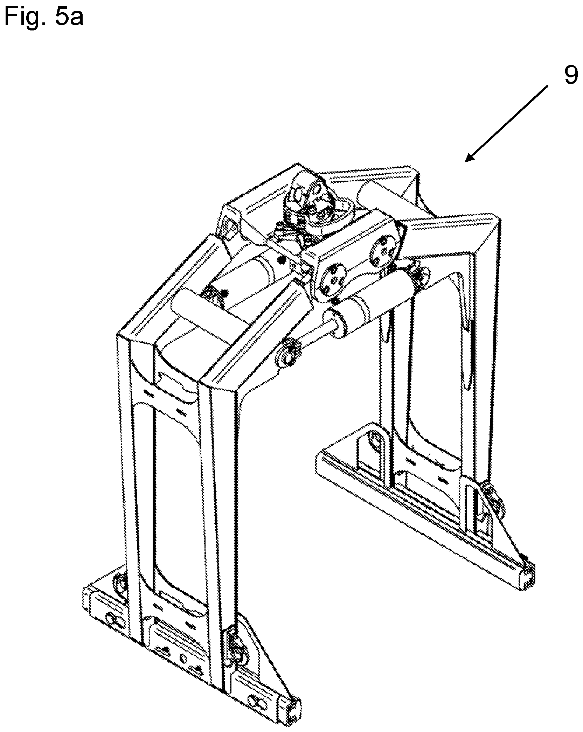

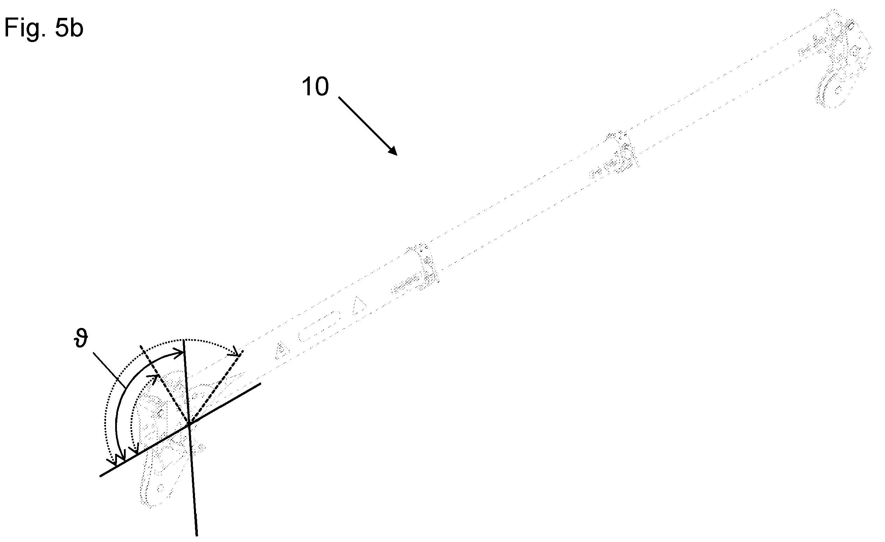

In den Figuren 5a und 5b sind zwei Ausführungen von am Armsystem anordenbaren Zusatzgeräten in Form eines exemplarisch als Steinstapelzange ausgeführten Arbeitsgeräts 9 und einer statischen Armverlängerung 10 gezeigt. Allgemein kann eine Sensor-basierte Geometrieerfassung des zumindest einen Zusatzgeräts 9, 10 auf Basis zumindest eines Freiheitsgrad der Geometrie des Zusatzgerätes 9, 10, beispielsweise veränderbare Abstände oder Winkel von bewegbaren Teilen des Zusatzgerätes 9, 10, erfolgen. Eine Vorgabe entsprechender Informationen durch einen Benutzer über eine entsprechende Benutzerschnittstelle der Steuerung 6 ist ebenso möglich.

In Figur 5a ist eine Ausführung eines Arbeitsgeräts 9 gezeigt, welches am einem Schubarm 5 einer Hebevorrichtung 1 angeordnet werden kann. Abmessungen und Funktionsumfang des Arbeitsgeräts 9 können in einer hier nicht dargestellten Steuerung 6 hinterlegt werden und in den Berechnungen der Steuerung 6 einbezogen werden.

Die in Figur 5b dargestellte statische Armverlängerung 10 kann an einem Schubarm 5 einer Hebevorrichtung 1 über eine entsprechende Aufnahme angeordnet werden. Durch eine verstellbar ausgebildete Aufnahme kann die Armverlängerung 10 unter einem Winkel ϑ (hier gegenüber einer gedachten vertikalen eingezeichnet) an einem Schubarm 5 angeordnet werden. Die Armverlängerung 10 kann längenveränderbar ausgebildet sein. Die Informationen zur Armverlängerung 10, wie etwa die Länge der Armverlängerung 10 und der Winkel ϑ, können in einer hier nicht dargestellten Steuerung 6 hinterlegt werden, beispielsweise durch eine Vorgabe oder eine Erfassung, und in Berechnungen der Steuerung 6 einbezogen werden.

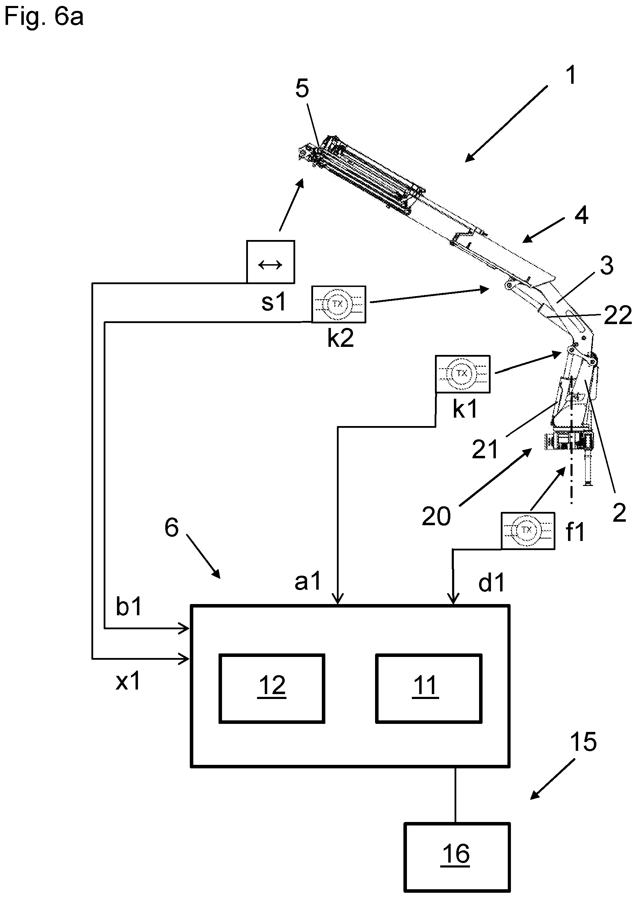

In Figur 6a ist eine Ausführung der Hebevorrichtung 1 gemäß der Figur 1a bzw. 2a gezeigt. Zudem ist eine schematische Darstellung der Steuerung 6 gezeigt, welche dazu konfigurierbar ist, ein erfindungsgemäßes Verfahren zum Bewegen einer Hebevorrichtung 1 durchzuführen.

Die hier schematisch dargestellte Steuerung 6 verfügt über mehrere Signaleingänge, welchen Signale der an der Hebevorrichtung 1 verbauten Sensorik zugeführt werden können. Weiter verfügt die Steuerung 6 über einen Speicher 11, in welchem beispielsweise Programmdaten zu Betriebsmodi und Berechnungsmodellen der Steuerung 6 sowie eingehende Signale gespeichert sein können, und über eine Recheneinheit 12, mit welcher unter anderem eingehende Signale und im Speicher 11 abgelegte Daten verarbeitet werden können. Die Steuerung 6 kann auch eine Anzeige 16 umfassen. Eine Kommunikation der Steuerung 6 mit der Anzeige 16 kann kabelgebunden und/oder drahtlos erfolgen. Die Sensorik zur Erfassung der Geometrie der Hebevorrichtung 1 umfasst in der in Figur 6a gezeigten Ausführung einen Drehwinkelsensor f1 zur Erfassung des Drehwinkels f1 der Kransäule 2, einen Knickwinkelsensor k1 zur Erfassung des Knickwinkels a1 des Hauptarms 3 zur Kransäule 2, einen Knickwinkelsensor k2 zur Erfassung des Knickwinkels b1 des Knickarms 4 zum Hauptarm 3 sowie einen Schubstellungssensor s1 zur Erfassung der Schubstellung x1 des Schubarms 5.

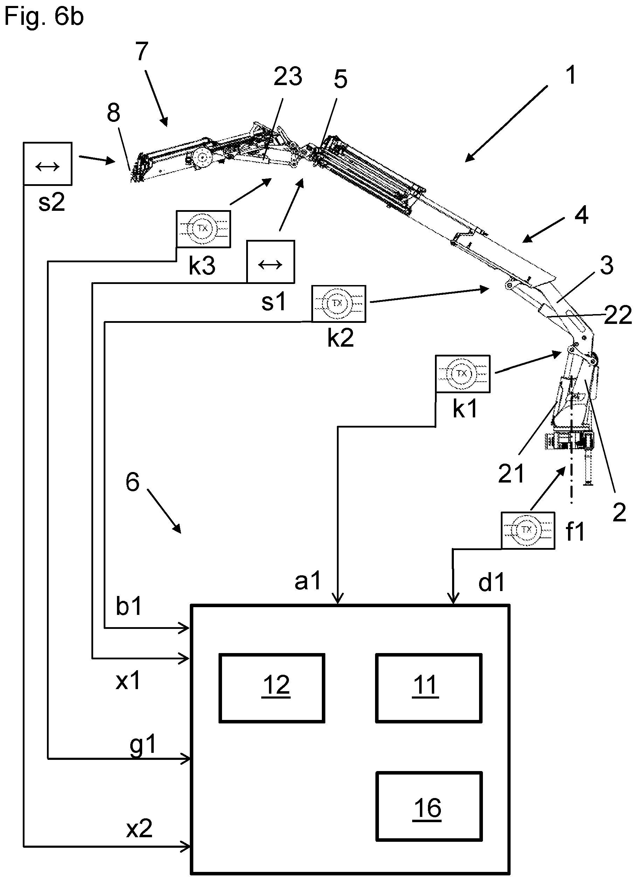

In Figur 6b ist analog zur Figur 6a eine Ausführung der Hebevorrichtung 1 gemäß der Figur 1b bzw. 2b gezeigt. Die Konfiguration der Hebevorrichtung 1 umfasst wie gezeigt einen am Schubarm 5 des Knickarms 4 angeordneten zweiten Knickarm 7. Als zusätzliche Sensorik zur Erfassung der Betriebsparameter der Hebevorrichtung 1 sind ein Knickwinkelsensor k3 zur Erfassung des Knickwinkels g1 des zweiten Knickarms 7 zum Knickarm 5und ein Schubstellungssensor s2 zur Erfassung der Schubstellung x2 des zweiten Schubarms 8 vorgesehen.

Eine analoge Ausführung der in den Figuren 6a und 6b gezeigten Anordnung aus einer Hebevorrichtung 1 gemäß der Figur 1c bzw. 2c und einer Steuerung 6 ist ebenso denkbar.

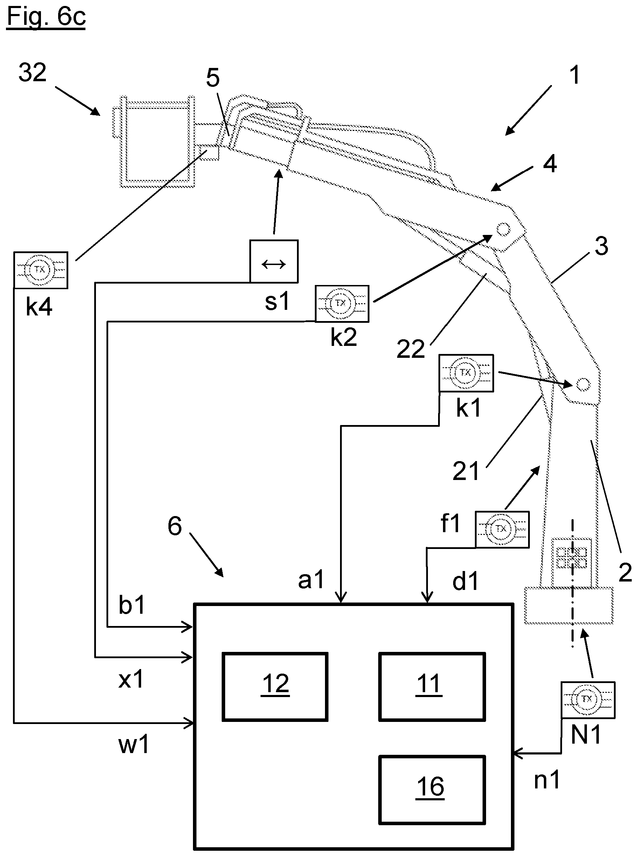

In Figur 6c ist analog zur Figur 6a eine Ausführung der Hebevorrichtung 1 gemäß der Figur 1b bzw. 2b gezeigt.

Zur Erfassung eines Neigungswinkels n1 der Hebevorrichtung 1 ist eine Neigungswinkelsensor N1 vorgesehen.

Ein Neigungswinkelsensor N1 kann grundsätzlich für alle gezeigten Ausführungen der Hebevorrichtung 1 vorgesehen sein.

An der in Figur 6c gezeigten Hebevorrichtung 1 in Form einer Hubarbeitsbühne ist an einem Schubarm 5 des Knickarms 4 ein Zusatzgerät in Form eines Arbeitskorb 32 angeordnet. Durch einen Knickwinkelsensor k4 zur Erfassung des Winkels w1 des Arbeitskorbs 32, beispielsweise relativ zu einer der drei Raumrichtungen, kann eine Erfassung einer Stellung des Arbeitskorbs 32 relativ zum Armsystem der Hebevorrichtung 1 erfolgen. In einem Speicher 11 der Steuerung 6 können Informationen zum Funktionsumfang, Dimensionsangaben und Winkelstellungen des Zusatzgeräts in Form des Arbeitskorbs 32 hinterlegt werden.

Eine in einer Messphase erfasste und/oder in einer Vorgabephase vorgegebene Stellung des Arbeitskorbs 32, oder allgemein eines Zusatzgeräts, relativ zum Armsystem der Hebevorrichtung 1 kann in der Vergleichsphase in die Bestimmung einer Geometrieabweichung einbezogen werden.

Die Zusammenhänge zwischen den Werten der Winkel und den Freiheitsgraden α, β, φ, γ der Winkel und den Werten der Schubstellungen und den Freiheitsgraden L, J, H der Schubstellungen, sowie Werten der Neigung und dem Neigungswinkel λ ergeben sich in den Figuren wie folgt:

| | | |
|---|---|---|
| Winkel a1 | Sensor k1 Werte α0, α1, α2, α3, α4 | Figur 3a |
| Winkel b1 | Sensor k2 Werte β1, β2, β3, β4 | Figur 3b |
| Winkel g1 | Sensor k3 Werte γ1, γ2, γ3, γ4 | Figur 3d |
| Winkel d1 | Sensor f1 Werte φ0, φ1, φ2, φ3, φ4 | Figur 3a |
| Winkel n1 | Sensor N1 Wert λ1 | Figur 8b |

| | | |
|---|---|---|
| Stellung x1 | Sensor s1 Werte L1, L2, L3, L4 | Figur 3c |
| Stellung x2 | Sensor s2 Werte J1, J2, J3, J4 | Figur 3e |

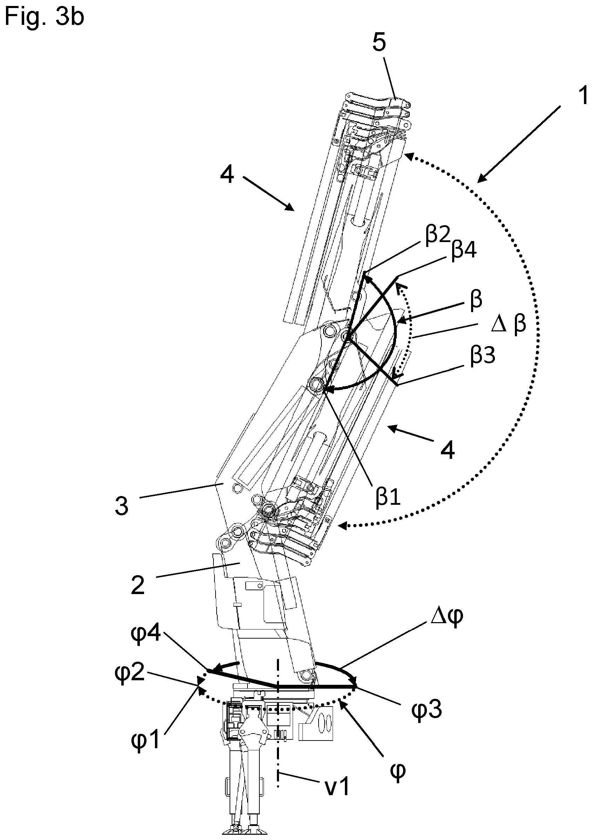

In den Figuren 3a, 3b, 3c, 3d, 3e und in Figur 4 sind neben den konstruktiv vorgegebenen Bereichen der Freiheitsgrade α, β, φ, γ, L, J, H des Armsystems exemplarisch unterschiedliche Zwischenstellungen für die Arme 2, 3, 4, 5, 7, 8, 18 des Armsystems schematisch dargestellt:
- Zwischenstellungen φ3, φ4 des Schwenkwinkels der Kransäule 2
- Zwischenstellungen α2, α3 des Schwenkwinkels des Hauptarms 3
- Zwischenstellungen β2, β3 des Schwenkwinkels des Knickarms 4
- Zwischenstellungen γ2, γ3 des Schwenkwinkels des zweiter Knickarms 7
- Zwischenstellungen L2, L3 des Schubstellungen des Schubarms 5
- Zwischenstellungen J2, J3 der Schubstellungen des zweiten Schubarms 8
- Zwischenstellungen H2, H3 der Schubstellungen des Hauptarm-Schubarms 18

Unterschiedliche und vorteilhaft im Wesentlichen frei wählbare Zwischenstellungen der Arme 2, 3, 4, 5, 7, 8, 18 des Armsystems innerhalb der konstruktiv vorgegebenen Bereiche können unterschiedlichen Geometrien des Armsystems entsprechen. Unterschiedliche Geometrien können auf Basis der Freiheitsgrade α, β, φ, γ, L, J, H des Armsystems verglichen werden. Folglich kann eine Geometrieabweichung auf Basis der Freiheitsgrade α, β, φ, γ, L, J, H des Armsystems qualitativ und quantitativ bestimmbar sein.

Beispielweise kann eine Zielposition durch die Werte der Schwenkwinkel φ2, α2, β2, γ2, und Schubstellungen L2, J2, H2 vorgegeben sein. Dies kann bei der Erfassung der momentanen Geometrie des Armsystems und/oder der Angabe der Geometrie des Armsystems über eine Benutzerschnittstelle der Steuerung 6 in einer Vorgabephase erfolgen.

In einer von einer Zielposition abweichenden Stellung des Armsystems der Hebevorrichtung 1 kann die Geometrie durch die Werte der Schwenkwinkel φ3, α3, β3, γ3, und Schubstellungen L3, J3, H3 charakterisiert sein. Die kann in einer Messphase durch eine Erfassung der momentanen Geometrie des Armsystems auf Basis der Freiheitsgrade α, β, φ, γ, L, J, H des Armsystems erfolgen. Dabei kann die Hebevorrichtung 1 durch eine Ansteuerung von Aktuatoren 20, 21, 22, 23, 25 in eine von der besagten Zielposition abweichende, vorzugsweise im Wesentlichen frei wählbare Stellung gebracht worden sein.

Durch eine Vergleich, beispielsweise einfach durch Bilden der Differenz, der jeweiligen, beispielsweise vorgegebenen und/oder über Sensoren erfassbaren Werte (siehe etwa Figuren 6a und 6b) der in unterschiedlichen Geometrien des Armsystems vorherrschenden Schwenkwinkeln φ3, φ4, α2, α3, β2, β3, γ2, γ3 und Schubstellungen L2, L3, J2 ,J3 , H2, H3 kann für eine in einer Auswahlphase ausgewählte Zielposition eine jeweilige Geometrieabweichung Δα, Δβ, Δφ, Δγ, ΔL, ΔJ, ΔH entlang des entsprechenden Freiheitsgrads α, β, φ, γ, L, J, H des Armsystems bestimmt werden. Dies kann in einer Vergleichsphase erfolgen.

Auf Basis der in der Vergleichsphase bestimmten Geometrieabweichung Δα, Δβ, Δφ, Δγ, ΔL, ΔJ, ΔH kann in Folge zumindest ein Steuerbefehl für die Ansteuerung zumindest eines der Aktuatoren 20, 21, 22, 23, 25 der Hebevorrichtung 1 erfolgen. Der Steuerbefehl oder die Steuerbefehle können zur Annäherung oder zumindest teilweisen Überführung des Armsystems der Hebevorrichtung 1 von der in der Messphase erfassten Geometrie in die Geometrie der in der Auswahlphase ausgewählten zumindest einen Zielposition dienen.

In einer Ansteuerungsphase kann ein zumindest teilweises Bewegen der Hebevorrichtung 1 in die ausgewählte Zielposition durch ein Ansteuern der entsprechenden Aktuatoren 20, 21, 22, 23, 25 des Armsystems mit dem zumindest einen in der Erzeugungsphase erzeugten Steuerbefehl erfolgen.

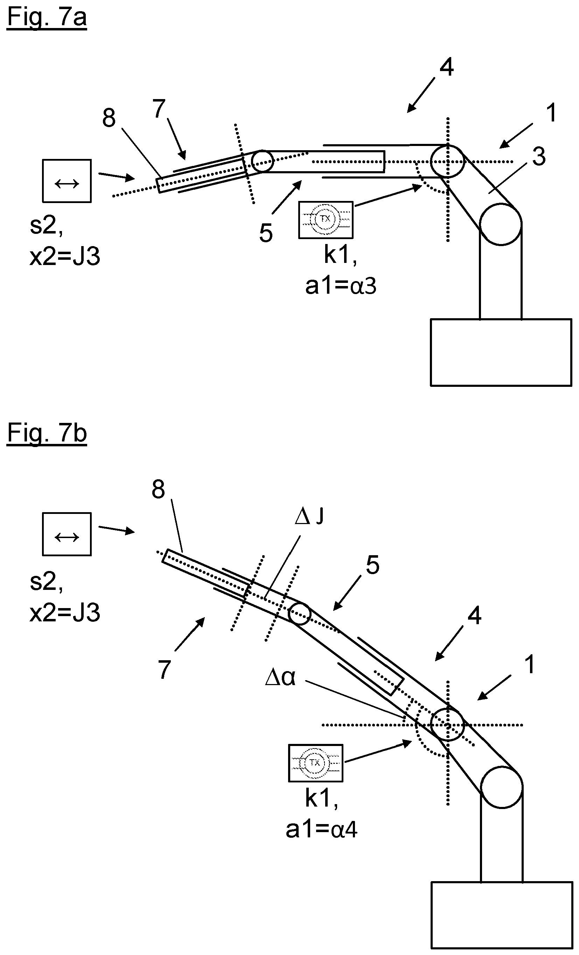

In den Figuren 7a und 7b ist eine schematische Ausführung einer Hebevorrichtung 1 gemäß der Figur 2b und 6b in verschiedenen Stellungen gezeigt.

In Figur 7a befindet sich das Armsystem der Hebevorrichtung 1 in einer Stellung, welche einer beispielhaften Zielposition entsprechen kann. in einer Vorgabephase kann eine Erfassung der momentanen Geometrie des Armsystems auf Basis der Freiheitsgrades α, β, φ, γ, L, J erfolgen. Der Einfachheit halber sind nur die durch die mittels des Knickwinkelsensors k1 und des Schubstellungssensor s2 erfassten Werte α3 des Schwenkwinkels des Hauptarms 2 und J3 der Schubstellung des zweiten Schubarms 8 dargestellt.

In Figur 7a befindet sich das Armsystem der Hebevorrichtung 1 in einer Stellung, welche einer beispielhaften, im Wesentlichen frei wählbaren Stellung der Hebevorrichtung entsprechen kann, aus der ein Benutzer die Hebevorrichtung 1 mithilfe eines erfindungsgemäßen Verfahrens in die Zielposition der Figur 7a bewegen möchte. Durch einen Benutzer kann in einer Auswahlphase eine entsprechende Auswahl der Zielposition erfolgen.

In einer Messphase kann die momentane Geometrie des Armsystems der in Figur 7b gezeigten Stellung mittels der verbauten Sensoren erfasst werden. In der gezeigten Stellung besteht gegenüber der Zielposition im Wesentlichen eine Änderung des Schwenkwinkels des Hauptarms 2 und eine Änderung der Schubstellung des zweiter Schubarms 8. Mittels des Knickwinkelsensors k1 und des Schubstellungssensor s2 können entsprechende Werte α4 des Schwenkwinkels des Hauptarms 2 und J4 der Schubstellung des zweiten Schubarms 8 erfasst werden.

In einer Vergleichsphase kann durch einen Vergleich der jeweiligen Geometrien eine Geometrieabweichung Δα, ΔJ bestimmt werden.

In einer Erzeugungsphase kann von einer dazu konfigurierten Recheneinheit auf Basis der in der Vergleichsphase bestimmten Geometrieabweichung Δα, ΔJ zumindest ein Steuerbefehl für die Ansteuerung zumindest eines der Aktuatoren 20, 21, 22, 23, 25 der Hebevorrichtung 1 erzeugt werden. In der beispielhaften Ausführung können zumindest zwei Steuerbefehle für die Aktuatoren des Schwenkwinkels des Hauptarms 2 und der Schubstellung des zweiten Schubarms 8 erzeugt werden.

Die zumindest zwei Steuerbefehle können in einer Ansteuerungsphase von der Steuerung 6 zum Ansteuern der Aktuatoren ausgegeben werden, wodurch ein zumindest teilweises Bewegen der Hebevorrichtung 1 aus der in Figur 7b gezeigten Stellung des Armsystems in die in Figur 7a gezeigten Stellung des Armsystems erfolgen kann.

Zur Annäherung oder Überführung des Armsystems kann die Hebevorrichtung 1 durch entsprechend erzeugte Steuerbefehle in eine innerhalb eines vorgebbaren oder vorgegebenen Toleranzbereichs an die Geometrie der Zielposition angenäherte Geometrie bewegt werden.

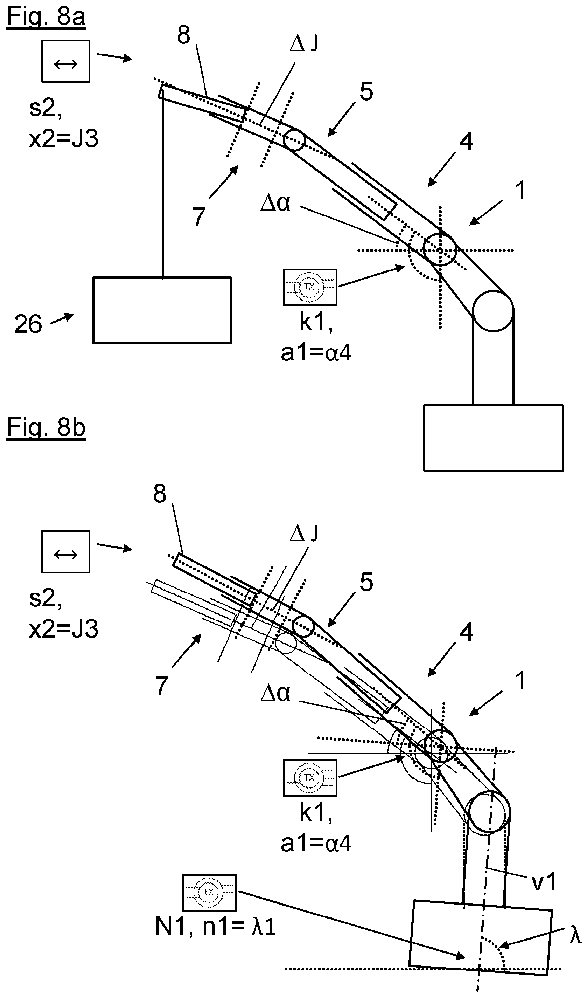

In Figur 8a ist dargestellt, wie eine Auslastung der Hebevorrichtung, beispielweise durch eine aufgenommene Last 26 eine Durchbiegung des Armsystems bewirken kann. Die Durchbiegung ist schematisch durch eine Verformung oder Auslenkung des zweiten Schubarms 8 dargestellt. Bei der Erfassung der momentanen Geometrie des Armsystems und/oder der Angabe der Geometrie des Armsystems über eine Benutzerschnittstelle der Steuerung 6 kann auf Basis eines Rechenmodells eine Bestimmung einer Durchbiegung des Armsystems erfolgen.

Die Geometrie des Armsystems kann zusätzlich zu den Freiheitsgraden α, β, φ, γ, L, J des Armsystems, mit einer in einem Rechenmodell bestimmten Durchbiegung des Armes 8 des Armsystems charakterisiert werden. Die Durchbiegung kann in der Vergleichsphase und der darauf basierenden Erzeugungsphase mit einbezogen werden.

In Figur 8b ist eine um einen Winkel λ relativ zu einem der Abstützung der Hebevorrichtung 1 dienenden horizontalen Untergrund geneigte Hebevorrichtung 1 gezeigt. Eine Neigung λ, hier dargestellt durch den Winkel zwischen der Horizontalen und der Drehachse v1, kann eine unerwünschte Abweichung der Stellung des Armsystems der Hebevorrichtung 1 gegenüber einer in einer ungeneigten oder mit einer abweichenden Neigung geneigten Stellung erfassten Zielposition bewirken. Zur Erfassung eines Neigungswinkels n1 der Hebevorrichtung 1 ist eine Neigungswinkelsensor N1 vorgesehen, wobei in der Figur ein Wert λ1 des Neigungswinkels n1 dargestellt ist.

Die Neigung λ kann beispielsweise durch eine Vorgabe oder eine Erfassung in der Steuerung 6 hinterlegt und in Berechnungen der Steuerung 6 einbezogen werden. Durch ein Einbeziehen der Neigung λ in ein entsprechendes Rechenmodell kann eine Kompensation einer Geometrieabweichung zwischen einer gegenwärtig vorherrschenden Geometrie und der Geometrie einer in der Auswahlphase ausgewählten zumindest einen Zielposition erfolgen.

Mit in einem entsprechenden Rechenmodell kann eine genauere Annäherung der Geometrie des Armsystems an die Geometrie der in der Auswahlphase ausgewählten zumindest einen Zielposition unabhängig von der gegenwärtig vorherrschenden Neigung λ der Hebevorrichtung 1 erfolgen.

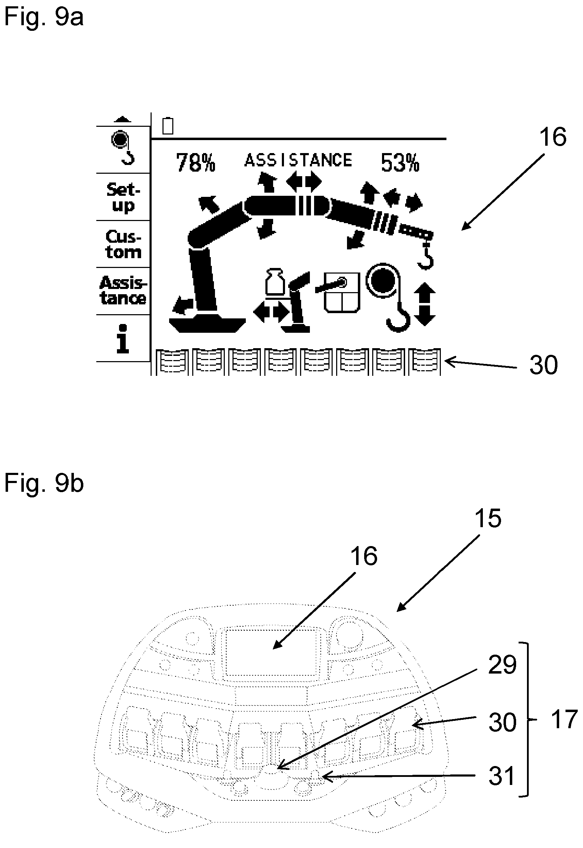

Figur 9a zeigt eine Anzeige 16 einer Steuerung 6 einer vorgeschlagenen Hebevorrichtung 1.

Ist die Anzeige 16 der Steuerung 6 als Touchdisplay ausgeführt, dann kann die Benutzerschnittstelle direkt über das Touchdisplay ausgeführt werden.

Ist diese Anzeige 16 nicht als Touchdisplay oder ähnliches ausgeführt, kann die menügeführte Benutzerschnittstelle über ein Bedienelement 17 navigiert werden.

Die in Figur 9a gezeigte Darstellung enthält zur Visualisierung von Bedienelementen 17 grafische Repräsentationen von mehreren Linearhebeln 30.

Figur 9b zeigt eine Ausführung eines Steuerpults 15 der Steuerung 6. Das Steuerpult 15 weist in der dargestellten Ausführung zumindest eine Anzeige 16 und Bedienelemente 17 in Form eines Drehknopfs 29, eines Linearhebels 30 und eines Tasters 31 auf. Die Bedienelemente können zur Navigation einer menügestützten Benutzerschnittstelle, zur Auswahl der durch einen Benutzer wählbaren Funktionen der Hebevorrichtung 1, insbesondere zu Vorgabe zumindest einer Zielposition, oder zur Abgabe von Steuerbefehlen durch einen Benutzer dienen.

Bei einer Ausführung des Steuerpults 15 gemäß der Ausführung der Steuerung 6 gemäß der Figur 9a kann das Steuerpult 15 ein vorgegebenes Bedienelement 17 beispielsweise in Form eines als Totmannschalter konfigurierten Tasters 31 aufweisen. Wenn sich die Steuerung 6 in einem wie zuvor beschriebenen sechsten Betriebsmodus für die Ansteuerungsphase befindet, kann durch Betätigung des Bedienelements 17 in Form des so konfigurierten Tasters 31 die Geometrie des Armsystems zumindest teilautomatisiert durch die Steuerung 6 veränderbar sein. Die Veränderung der Geometrie kann so lange durchführbar sein, wie das Bedienelement 17 in Form beispielsweise des Tasters 31 vom Benutzer betätigt bleibt.

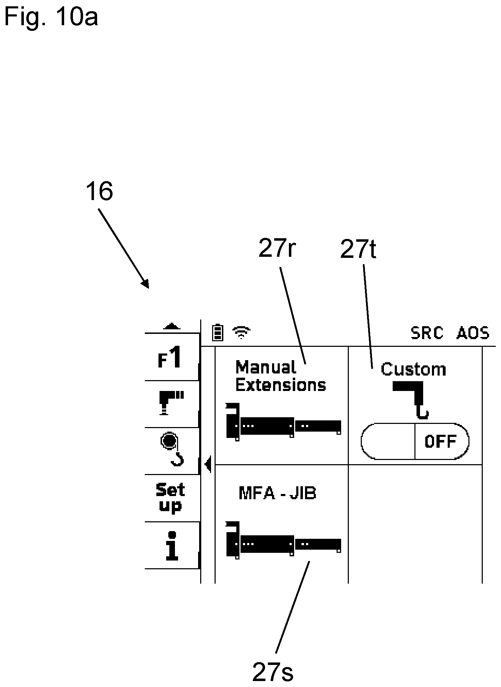

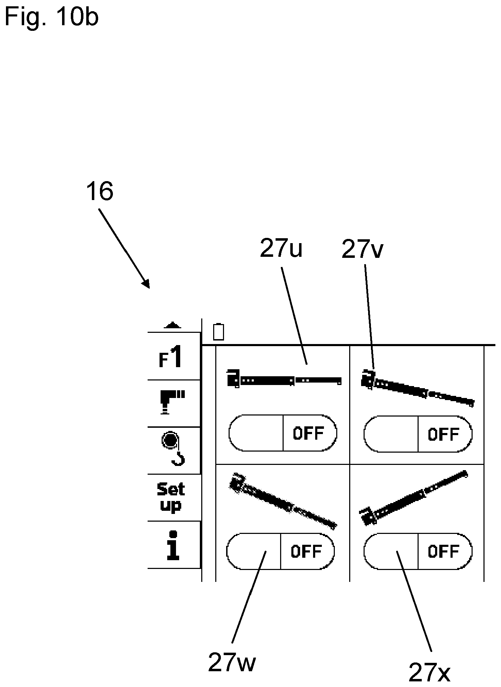

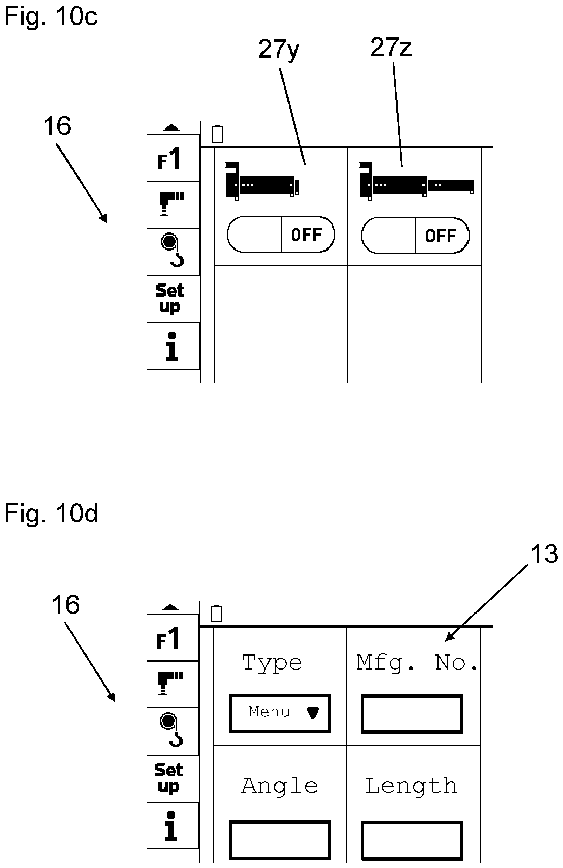

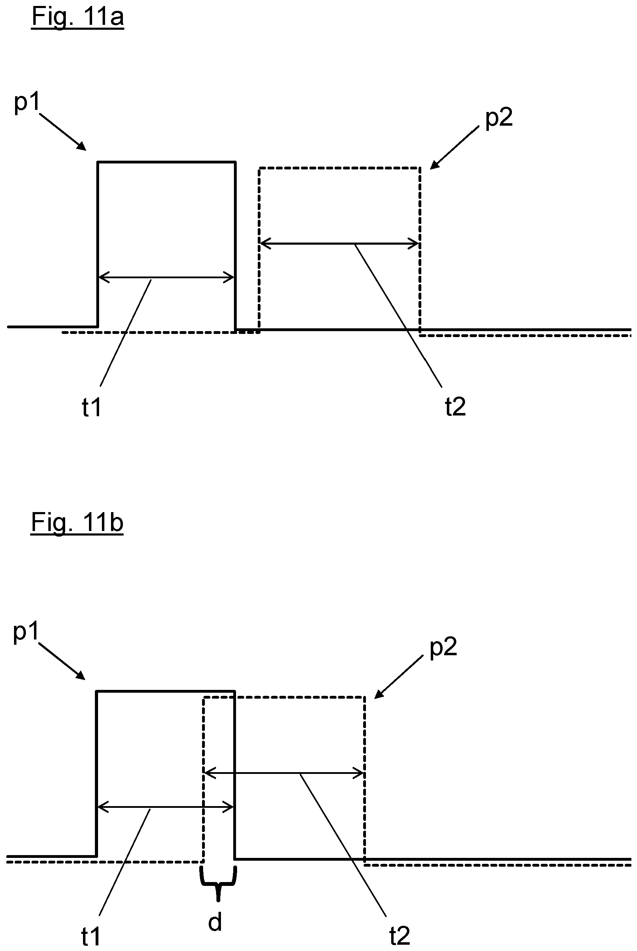

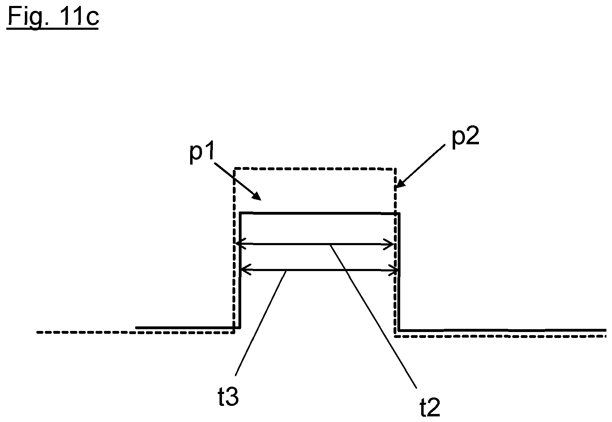

Die Figuren 10a bis 10c zeigen beispielhaft Ausführungen von Benutzerschnittstellen, die jeweils durch Anzeigen 16 einer Steuerung 6, die als Touchdisplay ausgebildet sein können, gebildet sind. Die hierbei dargestellten, durch einen Benutzer wählbaren Funktionen 27r, 27s, 27t, 27u, 27v, 27w, 27x, 27y, 27z dienen jeweils der Eingabe und/oder Erfassung von Informationen zu einem am Armsystem der Hebevorrichtung 1 angebrachten Zusatzgerät 9, 10, 32 (siehe etwa Figuren 5a, 5b und 6c). Über die in Figur 10a dargestellten wählbare Funktionen 27r und 27s gelangt man beispielsweise zu einem Menü, über das Informationen zu einem Zusatzgerät in Form einer Armverlängerung 10 oder einem Arbeitsgerät 9 (siehe Figuren 5a und 5b) oder einem Arbeitskorb (siehe Figur 6c) aus einer im Speicher 11 der Steuerung 6 hinterlegten Datenbank auswählbar sind. Über die in Figur 11a dargestellte wählbare Funktion 27t gelangt man beispielsweise zu einer Einstellmaske, über die Informationen zu nicht im Speicher 11 der Steuerung 6 hinterlegten Zusatzgeräten 9, 10, 32 eingebbar sind. Über die in Figur 11b dargestellten wählbaren Funktionen 27u, 27v, 27w, 27x kann eine Winkelstellung (Winkel ϑ) einem am Armsystem angebrachten Zusatzgerät in Form einer Armverlängerung 10 (siehe Figur 5b) ausgewählt bzw. eingegeben werden. Die in Figur 11c dargestellten wählbaren Funktionen 27y, 27z dienen der Auswahl des Rüstzustandes einem am Armsystem angebrachten Zusatzgerät in Form beispielsweise einer oder mehrerer manuell betätigbarer Ausschubverlängerungen.

In Figur 10d ist eine Ausführung einer auf einer Anzeige 16 angezeigten Eingabemaske 13 gezeigt, über welche Informationen zum Funktionsumfang und/oder Dimensionsangaben und/oder Winkelstellungen zu dem zumindest einen Zusatzgerät 9, 10, 32 auswählbar oder eingebbar und an die Steuerung 6 übergebbar sind.

Es soll nicht ausgeschlossen sein, dass an der Hebevorrichtung 1 weitere Sensoren zur Erfassung einer Winkelstellung und/oder einer Abmessung zumindest eines Zusatzgeräts 9, 10, 32 angeordnet sind, welche über Signaleingänge der Steuerung 6 zuführbar sind und in Berechnungen der Steuerung 6 einbezogen werden können. Die Steuerung 6 kann zur Erfassung eine geeignete wählbare Funktion aufweisen.

Eine Ansteuerung von Aktuatoren in der Ansteuerungsphase, mit Bezugnahme auf die Figuren 7a und 7b beispielsweise der Aktuator 21 des Knickarms 22 und einem Aktuator des Schubarms 8, kann beispielsweise mit Steuerbefehlen in Form von Steuerpulsen p1, p2 mit einer Amplitude und einer Signaldauer gemäß den Figuren 11a und 11b erfolgen.

Die durch die Steuerung 6 erfolgende Ausgabe der Steuerpulse p1, p2 kann wie in Figur 11 a illustriert sequenziell erfolgen. Wie dargestellt weisen die Steuerpulse p1, p2 unterschiedliche Signaldauern t1, t2 auf. Die Signaldauern t1, t2 können jeweils einer nominalen Signaldauer entsprechen.

In der Abfolge an Steuerbefehlen aufeinanderfolgende Steuerpulse p1, p2 können wie in Figur 11b illustriert von der Steuerung 6 auch abschnittsweise, also für die Dauer einer Überlappung d, gleichzeitig ausgegeben werden.

Es kann also beispielsweise gemäß Figur 11b zunächst mit der Aktivierung eines Aktuators, beispielsweise des Aktuators 21 des Knickarms 22, für die Pulsdauer t1 des Steuerpulses p1 begonnen werden. Vor Beendigung des laufenden Steuerpulses p1 kann bereits mit der Aktivierung des weiteren Aktuators, beispielsweise des Aktuators des Schubarms 8, mit der Ausgabe des gemäß einer berechneten Abfolge sequenziell folgenden Steuerpulses p2 begonnen werden.

Eine Ansteuerung von Aktuatoren kann wie in Figur 11c zumindest teilweise gleichzeitig erfolgen, wobei eine jeweilige Signaldauer t1, t2 der zumindest zwei Steuerpulse p1, p2 an die größte nominale Signaldauer, in der beispielhaften Illustration die Signaldauer t2 des Steuerpulses p2, der Steuerpulse angeglichen wird. Die Signaldauern t1, t2 unterschiedlicher Steuerpulse p1, p2 für unterschiedliche Aktuatoren kann auf die Signaldauer t2 des Steuerpuls p2 mit der bei Erzeugung des Steuerpuls p2 größten nominalen Signaldauer t2 skaliert werden. Die Signaldauer t3 des Steuerpulses p1 kann entsprechend der nominalen Signaldauer t2 des Steuerpulses p2 vergrößert werden, wobei die Amplitude und damit eine Änderungsrate der Bewegung des korrespondierenden Aktuators entsprechend der geänderten Signaldauer t3 skaliert werden kann. So kann erreicht werden, dass bei einer zumindest teilweise gleichzeitigen Ansteuerung der beteiligten Aktuatoren die für die Zielposition vorgegebene Endstellung von allen beteiligten Aktuatoren im Wesentlichen gleichzeitig erreicht wird.

Bezugszeichen
- 1: Hebevorrichtung
- 2: Kransäule
- 3: Hauptarm
- 4: Knickarm
- 5: Schubarm
- 6: Steuerung
- 7: zweiter Knickarm
- 8: zweiter Schubarm
- 9: Arbeitsgerät
- 10: Armverlängerung
- 11: Speicher
- 12: Recheneinheit
- 13: Einstellmaske
- 14: Kranspitze
- 15: Steuerpult
- 16: Anzeige
- 17: Bedienelement
- 18: Hauptarm-Schubarm
- 19: Fahrzeug
- 20: Drehwerk
- 21: Hauptzylinder
- 22, 23, 25: Knickzylinder
- 24: weiterer Knickarm
- 26: Last
- 27r-27z: Funktionen
- 28: Verbindungsbereich
- 29: Drehknopf
- 30: Linearhebel
- 31: Taster
- 32: Arbeitskorb
- v1, h1, h2, h3: Achsen
- α, β, φ, γ, L, J, H: Freiheitsgrade Armsystem
- Δα, Δβ, Δφ, Δγ, ΔL, ΔJ, ΔH: Abweichung entlang Freiheitsgrad
- φ0, φ1, φ2, φ3, φ4: Schwenkwinkel Kransäule
- α0, α1, α2, α3, α4: Schwenkwinkel Hauptarm
- β1, β2, β3, β4: Schwenkwinkel Knickarm
- γ1, γ2, γ3, γ4: Schwenkwinkel zweiter Knickarm
- λ1: Neigungswinkel Hebevorrichtung
- L1, L2, L3, L4: Schubstellungen Schubarm
- J1, J2, J3, J4: Schubstellungen zweiter Schubarm
- H1, H2, H3, H4: Schubstellungen Hauptarm-Schubarm
- ϑ: Winkel Armverlängerung
- λ: Neigungswinkel
- a1, b1, g1, d1, w1, n1: Winkel
- x1, x2: Schubstellung
- s1, s2: Schubstellungssensor
- k1, k2, k3, k4: Knickwinkelsensor
- f1: Drehwinkelsensor
- N1: Neigungswinkelsensor
- p1, p2: Steuerpuls
- t1, t2, t3: Signaldauer

## Patentansprüche

1. Verfahren zum Bewegen einer Hebevorrichtung (1), vorzugsweise eines Ladekrans, wobei die Hebevorrichtung (1) eine Steuerung (6) und ein Armsystem mit Armen (2, 3, 4, 5, 7, 8, 18) mit einer durch zumindest einen Aktuator (20, 21, 22, 23, 25) entlang von zumindest einem Freiheitsgrad (α, β, φ, γ, L, J, H) veränderbaren Geometrie aufweist, **dadurch gekennzeichnet, dass**
- in einer Vorgabephase eine Vorgabe zumindest einer Zielposition für die Hebevorrichtung (1) erfolgt, wobei die Vorgabe durch eine Angabe der Geometrie des Armsystems in zumindest einer Zielposition auf Basis des zumindest einen Freiheitsgrades (α, β, φ, γ, L, J, H) über eine Benutzerschnittstelle der Steuerung (6) erfolgt und/oder die Hebevorrichtung (1) durch eine Ansteuerung von Aktuatoren (20, 21, 22, 23, 25) in zumindest eine Zielposition gebracht wird und in der zumindest einen Zielposition eine Erfassung der momentanen Geometrie des Armsystems auf Basis des zumindest einen Freiheitsgrades (α, β, φ, γ, L, J, H) erfolgt,
- in einer Messphase eine Erfassung der momentanen Geometrie des Armsystems auf Basis des zumindest einen Freiheitsgrades (α, β, φ, γ, L, J, H) erfolgt,
- in einer Auswahlphase eine Auswahl zumindest einer in der Vorgabephase vorgegebenen Zielposition erfolgt,
- in einer Vergleichsphase durch einen Vergleich der jeweiligen Geometrien des Armsystems auf Basis des zumindest einen Freiheitsgrades (α, β, φ, γ, L, J, H) eine Geometrieabweichung (Δα, Δβ, Δφ, Δγ, ΔL, ΔJ, ΔH) zwischen der Geometrie der in der Auswahlphase ausgewählten zumindest einen Zielposition und der in der Messphase erfassten momentanen Geometrie bestimmt wird,
- in einer Erzeugungsphase auf Basis der in der Vergleichsphase bestimmten Geometrieabweichung (Δα, Δβ, Δφ, Δγ, ΔL, ΔJ, ΔH) zumindest ein Steuerbefehl, vorzugsweise in Form zumindest eines Steuerpulses (p1, p2), für die Ansteuerung zumindest eines der Aktuatoren (20, 21, 22, 23, 25) der Hebevorrichtung (1) zur Annäherung oder zumindest teilweisen Überführung des Armsystems der Hebevorrichtung (1) von der in der Messphase erfassten Geometrie in die Geometrie der in der Auswahlphase ausgewählten zumindest einen Zielposition erzeugt wird, und
- in einer Ansteuerungsphase ein zumindest teilweises Bewegen der Hebevorrichtung (1) in die ausgewählte Zielposition durch ein Ansteuern der Aktuatoren (20, 21, 22, 23, 25) des Armsystems mit dem zumindest einen in der Erzeugungsphase erzeugten Steuerbefehl erfolgt.

2. Verfahren nach dem vorangehenden Anspruch, wobei die zumindest eine Zielposition einer im Wesentlichen frei wählbaren Stellung der Hebevorrichtung (1) entspricht.

3. Verfahren nach einem der vorangehenden Ansprüche, wobei die in der Messphase erfasste momentane Geometrie der Hebevorrichtung (1) einer von der in der Auswahlphase ausgewählten Zielposition abweichenden - und vorzugsweise durch eine Ansteuerung von Aktuatoren (20, 21, 22, 23, 25) im Wesentlichen frei wählbaren - Geometrie des Armsystems entspricht.

4. Verfahren nach einem der vorangehenden Ansprüche, wobei die Erfassung einer momentanen Geometrie auf Basis von Sensordaten von an der Hebevorrichtung (1) angeordneten Sensoren (s1, s2, k1, k2, k3, f1) zur Winkelmessung und/oder Längenmessung erfolgt.

5. Verfahren nach einem der vorangehenden Ansprüche, wobei
- bei der Erfassung der momentanen Geometrie des Armsystems und/oder
- der Angabe der Geometrie des Armsystems über eine Benutzerschnittstelle der Steuerung (6)
auf Basis eines Rechenmodells eine Bestimmung einer Durchbiegung des Armsystems erfolgt.

6. Verfahren nach einem der vorangehenden Ansprüche, wobei
- bei der Erfassung der momentanen Geometrie des Armsystems und/oder
- der Angabe der Geometrie des Armsystems über eine Benutzerschnittstelle der Steuerung (6)
eine Erfassung einer Neigung (A) der Hebevorrichtung (1) relativ zu einer vorgegebenen oder vorgebbaren Raumrichtung erfolgt.

7. Verfahren nach einem der vorangehenden Ansprüche, wobei
- bei der Erfassung der momentanen Geometrie des Armsystems und/oder
- der Angabe der Geometrie des Armsystems über eine Benutzerschnittstelle der Steuerung (6)
eine Erfassung einer Stellung zumindest eines Zusatzgeräts (9, 10, 32) relativ zum Armsystem der Hebevorrichtung (1) und/oder eine Geometrieerfassung des zumindest einen Zusatzgeräts (9, 10, 32) auf Basis zumindest eines Freiheitsgrad der Geometrie des zumindest einen Zusatzgeräts (9, 10, 32) erfolgt.

8. Verfahren nach einem der vorangehenden Ansprüche, wobei der zumindest einen Steuerbefehl zur Annäherung oder Überführung des Armsystems der Hebevorrichtung (1) von der in der Messphase erfassten Geometrie in eine innerhalb eines vorgebbaren oder vorgegebenen Toleranzbereichs an die Geometrie der in der Auswahlphase ausgewählten zumindest einen Zielposition angenäherte Geometrie erzeugt wird.

9. Verfahren nach einem der vorangehenden Ansprüche, wobei in der Erzeugungsphase nur für Aktuatoren (20, 21, 22, 23, 25) Steuerbefehle erzeugt werden, für welche in der Vergleichsphase eine Geometrieabweichung (Δα, Δβ, Δφ, Δγ, ΔL, ΔJ, ΔH) entlang des mit dem Aktuator (20, 21, 22, 23, 25) korrespondierenden zumindest einen Freiheitsgrads (α, β, φ, γ, L, J, H) bestimmt wird.

10. Verfahren nach einem der vorangehenden Ansprüche, wobei in der Vorgabephase eine Angabe und/oder Erfassung zumindest eines Werts zumindest eines Freiheitsgrades (α, β, φ, γ, L, J, H) von zueinander entlang des zumindest einen Freiheitsgrades (α, β, φ, γ, L, J, H) bewegbaren Armen des Armsystems erfolgt, in der Messphase eine wiederholte Erfassung zumindest eines Werts zumindest eines Freiheitsgrads (α, β, φ, γ, L, J, H) erfolgt und in der Vergleichsphase die Bestimmung der Geometrieabweichung (Δα, Δβ, Δφ, Δγ, ΔL, ΔJ, ΔH) durch Bestimmung einer Abweichung des zumindest einen entsprechend in der Auswahlphase ausgewählten und in der Vorgabephase angegebenen und/oder erfassten Werts zu dem zumindest einen in der Messphase erfassten Werts erfolgt.

11. Verfahren nach einem der vorangehenden Ansprüche, wobei der zumindest eine in der Erzeugungsphase erzeugte Steuerbefehl Informationen zu einem anzusteuernden Aktuator (20, 21, 22, 23, 25) und eine nominale Signaldauer (t1, t2) zur Dauer der Ansteuerung umfasst.

12. Verfahren nach einem der vorangehenden Ansprüche, wobei in der Erzeugungsphase zumindest zwei Steuerbefehle erzeugt werden und ein Ansteuern der Aktuatoren (20, 21, 22, 23, 25) in der Ansteuerungsphase mit den zumindest zwei in der Erzeugungsphase erzeugten Steuerbefehlen zumindest teilweise sequenziell und/oder zumindest teilweise gleichzeitig erfolgt.

13. Verfahren nach einem der vorangehenden Ansprüche, wobei in der Erzeugungsphase zumindest zwei Steuerbefehle erzeugt werden und ein Ansteuern der Aktuatoren (20, 21, 22, 23, 25) in der Ansteuerungsphase mit den zumindest zwei in der Erzeugungsphase erzeugten Steuerbefehlen
- zumindest teilweise sequenziell nach der Größe der Geometrieänderung bei Ansteuerung eines Aktuators (20, 21, 22, 23, 25) der angesteuerten Aktuatoren (20, 21, 22, 23, 25) geordnet erfolgt, und/oder
- zumindest teilweise sequenziell nach der Größe der Verringerung der Ausladung des Armsystems bei Ansteuerung eines Aktuators (20, 21, 22, 23, 25) der angesteuerten Aktuatoren (20, 21, 22, 23, 25) geordnet erfolgt, und/oder
- zumindest teilweise nach einer Kostenfunktion geordnet erfolgt, und/oder
- zumindest teilweise gleichzeitig erfolgt, wobei eine jeweilige Signaldauer (t1, t2, t3) der zumindest zwei Steuerbefehle an eine größte nominale Signaldauer (t1, t2) der Steuerbefehle angeglichen wird.

14. Verfahren nach einem der vorangehenden Ansprüche, wobei in der Vorgabephase die Hebevorrichtung (1) mit von einem Benutzer über eine Steuerung (6) mit Bedienbefehlen generierten Steuerbefehlen für eine Ansteuerung von Aktuatoren (20, 21, 22, 23, 25) im Wesentlichen frei bewegbar ist und in der Ansteuerungsphase eine Bewegung der Hebevorrichtung (1) durch zumindest einen von einer Steuerung (6) in der Erzeugungsphase erzeugten Steuerbefehl erfolgt.

15. Verfahren nach einem der vorangehenden Ansprüche, wobei in der Ansteuerungsphase ein Bewegen der Hebevorrichtung (1) durch Ausgabe des zumindest einen in der Erzeugungsphase erzeugten Steuerbefehls durch eine Steuerung (6) zumindest teilautomatisiert erfolgt.

16. Steuerung (6) für eine hydraulische Hebevorrichtung (1), vorzugsweise für einen Ladekran, die zur Durchführung eines Verfahrens zum Bewegen einer Hebevorrichtung (1) nach einem der vorangehenden Ansprüche ausgebildet ist, wobei von der Steuerung (6)
- in einem ersten Betriebsmodus die Vorgabephase zur Vorgabe zumindest einer Zielposition durch eine Angabe der Geometrie des Armsystems in zumindest einer Zielposition auf Basis des zumindest einen Freiheitsgrades (α, β, φ, γ, L, J, H) über eine Benutzerschnittstelle der Steuerung (6) und/oder durch eine Ansteuerung von Aktuatoren (20, 21, 22, 23, 25) und zur Erfassung der momentanen Geometrie des Armsystems auf Basis zumindest eines Freiheitsgrades (α, β, φ, γ, L, J, H) durchführbar ist,
- in einem zweiten Betriebsmodus die Messphase zur wiederholten Erfassung der momentanen Geometrie des Armsystems auf Basis zumindest eines Freiheitsgrades (α, β, φ, γ, L, J, H) durchführbar ist,
- in einem dritten Betriebsmodus die Auswahlphase zur Auswahl zumindest einer in der Vorgabephase vorgegebenen Zielposition durchführbar ist,
- in einem vierten Betriebsmodus die Vergleichsphase zur Bestimmung der Geometrieabweichung (Δα, Δβ, Δφ, Δγ, ΔL, ΔJ, ΔH) auf Basis zumindest eines Freiheitsgrades (α, β, φ, γ, L, J, H) zwischen in der Geometrie der in der Auswahlphase ausgewählten zumindest einen Zielposition und der in der Messphase erfassten momentanen Geometrie durchführbar ist,
- in einem fünften Betriebsmodus die Erzeugungsphase zur Erzeugung zumindest eines Steuerbefehls für die Ansteuerung zumindest eines der Aktuatoren (20, 21, 22, 23, 25) der Hebevorrichtung (1) zur Überführung des Armsystems der Hebevorrichtung (1) von der in der Messphase erfassten Geometrie in die Geometrie der in der Auswahlphase ausgewählten zumindest einen Zielposition mit einer dazu konfigurierten Recheneinheit (12) der Steuerung (6) durchführbar ist, und
- in einem sechsten Betriebsmodus die Ansteuerungsphase zum - vorzugsweise zumindest teilautomatisierten - Ansteuern der Aktuatoren (20, 21, 22, 23, 25) des Armsystems der Hebevorrichtung (1) durch Ausgabe des zumindest einen in der Erzeugungsphase erzeugten Steuerbefehls durch die Steuerung (6) durchführbar ist.

17. Steuerung (6) für eine Hebevorrichtung (1) nach dem vorangehenden Anspruch, wobei die Steuerung (6) im sechsten Betriebsmodus zum Ansteuern der Aktuatoren (20, 21, 22, 23, 25) zumindest einen Bedienelement einer Benutzerschnittstelle aktiviert und durch Betätigung des zumindest einen Bedienelements (17) die Geometrie des Armsystems zumindest teilautomatisiert durch die Steuerung (6) veränderbar ist, wobei vorzugsweise die Steuerung (6) eine Änderungsrate der Geometrie des Armsystems in Abhängigkeit zu einer Betätigung des zumindest einen Bedienelements (17) der Benutzerschnittstelle steuert.

18. Computerprogrammprodukt, umfassend Befehle, welche bei einer Ausführung durch die Recheneinheit (12) der Steuerung (6) nach einem der Ansprüche 16 oder 17 diese veranlassen, aus dem Speicher (11) der Steuerung (12), welcher mit der Recheneinheit (12) in einer Datenverbindung steht oder in eine solche bringbar ist, ein Verfahren nach einem der Ansprüche 1 bis 15 auszuführen.

19. Datenträgersignal, das das Computerprogrammprodukt nach dem vorangehenden Anspruch überträgt.

20. Hebevorrichtung (1), insbesondere Ladekran, mit einem mehrere durch Aktuatoren (20, 21) bewegbare Arme (2, 3) aufweisenden Armsystem, wobei das Armsystem wenigstens aufweist:
- eine mit einem ersten Aktuator (20) um eine Drehachse (v1) drehbare Kransäule (2), wobei das Armsystem durch die verschwenkbare Lagerung der Kransäule (2) einen ersten Freiheitsgrad (φ) aufweist,
- einen mit einem zweiten Aktuator (21) relativ zur Kransäule (2) schwenkbaren Hauptarm (3), wobei das Armsystem durch verschwenkbare Lagerung des Hauptarms (3) einen zweiten Freiheitsgrad (α) aufweist
und wobei die Hebevorrichtung (1) eine Steuerung (6) nach einem der Ansprüche 16 oder 17 aufweist, mit welcher zur Veränderung der Geometrie des Armsystems Steuerbefehle an Aktuatoren (20, 21) des Armsystems ausgebbar sind, wobei durch die Steuerung (6) auf Basis von am Armsystem verbauten Sensoren (k1, f1) eine momentane Geometrie des Armsystems auf Basis der Freiheitsgrade (φ, α) der Hebevorrichtung (1) erfassbar ist.

## Claims

1. A method for moving a lifting device (1), preferably a loading crane, wherein the lifting device (1) has a controller (6) and an arm system with arms (2, 3, 4, 5, 7, 8, 18) with a geometry that can be changed by at least one actuator (20, 21, 22, 23, 25) along at least one degree of freedom (α, β, ϕ, γ, L, J, H), **characterized in that**
- in a presetting phase, at least one target position for the lifting device (1) is preset, wherein the presetting occurs by specifying the geometry of the arm system in at least one target position on the basis of the at least one degree of freedom (α, β, ϕ, γ, L, J, H) via a user interface of the controller (6) and/or the lifting device (1) is brought into at least one target position by controlling actuators (20, 21, 22, 23, 25) and in the at least one target position, the instantaneous geometry of the arm system is detected on the basis of the at least one degree of freedom (α, β, ϕ, γ, L, J, H),
- in a measuring phase a detection of the instantaneous geometry of the arm system takes place based on the at least one degree of freedom (α, β, ϕ, y, L, J, H),
- in a selection phase, a selection of at least one target position specified in the presetting phase takes place,
- in a comparison phase, a geometrical deviation (Δα, Δβ, Δϕ, Δγ, ΔL, ΔJ, ΔH) between the geometry of the at least one target position selected in the selection phase and the instantaneous geometry detected in the measuring phase is determined by comparing the respective geometries of the arm system on the basis of the at least one degree of freedom (α, β, ϕ, γ, L, J, H).
- in a generation phase, on the basis of the geometry deviation (Δα, Δβ, Δϕ, Δγ, ΔL, ΔJ, ΔH), determined in the comparison phase, at least one control command, preferably in the form of at least one control pulse (p1, p2), is generated for controlling at least one of the actuators (20, 21, 22, 23, 25) of the lifting device (1) for approaching or at least partially transferring the arm system of the lifting device (1) from the geometry detected in the measuring phase to the geometry of the at least one target position selected in the selection phase, and
- in a control phase, the lifting device (1) is at least partially moved into the selected target position by controlling the actuators (20, 21, 22, 23, 25) of the arm system with the at least one control command generated in the generation phase.

2. The method according to the preceding claim, wherein the at least one target position corresponds to a substantially freely selectable position of the lifting device (1).

3. The method according to one of the preceding claims, wherein the instantaneous geometry of the lifting device (1) detected in the measuring phase corresponds to a geometry of the arm system which deviates from the target position selected in the selection phase - and which is preferably essentially freely selectable by controlling actuators (20, 21, 22, 23, 25).

4. The method according to one of the preceding claims, wherein the detection of an instantaneous geometry is carried out on the basis of sensor data from sensors (s1, s2, k1, k2, k3, f1) arranged on the lifting device (1) for angle measurement and/or length measurement.

5. The method according to one of the preceding claims, wherein
- when detecting the instantaneous geometry of the arm system and/or
- specifying the geometry of the arm system via a user interface of the controller (6)
a deflection of the arm system is determined on the basis of a calculation model.

6. The method according to one of the preceding claims, wherein
- when detecting the instantaneous geometry of the arm system and/or
- specifying the geometry of the arm system via a user interface of the controller (6)
a detection of an inclination (λ) of the lifting device (1) relative to a preset or predeterminable spatial direction takes place.

7. The method according to one of the preceding claims, wherein
- when detecting the instantaneous geometry of the arm system and/or
- specifying the geometry of the arm system via a user interface of the controller (6)
a detection of a position of at least one additional device (9, 10, 32) relative to the arm system of the lifting device (1) and/or a geometry detection of the at least one additional device (9, 10, 32) is carried out on the basis of at least one degree of freedom of the geometry of the at least one additional device (9, 10, 32).

8. The method according to one of the preceding claims, wherein the at least one control command is generated to approach or transfer the arm system of the lifting device (1) from the geometry detected in the measuring phase to a geometry that approximates the geometry of the at least one target position selected in the selection phase within a predeterminable or preset tolerance range.

9. The method according to one of the preceding claims, wherein in the generation phase control commands are generated only for actuators (20, 21, 22, 23, 25), for which in the comparison phase a geometric deviation (Δα, Δβ, Δϕ, Δγ, ΔL, ΔJ, ΔH) along the at least one degree of freedom (α, β, ϕ, γ, L, J, H) corresponding to the actuator (20, 21, 22, 23, 25) is determined.

10. The method according to one of the preceding claims, wherein in the presetting phase at least one value of at least one degree of freedom (α, β, ϕ, γ, L, J, H) of arms of the arm system that are movable relative to one another along the at least one degree of freedom (α, β, ϕ, γ, L, J, H) is specified and/or detected, in the measuring phase a repeated detection of at least one value of at least one degree of freedom (α, β, ϕ, γ, L, J, H) takes place and in the comparison phase the geometry deviation (Δα, Δβ , Δϕ, Δγ, ΔL, ΔJ, ΔH) is determined by determining a deviation of the at least one value selected accordingly in the selection phase and specified and/or detected in the presetting phase from the at least one value detected in the measuring phase.

11. The method according to one of the preceding claims, wherein the at least one control command generated in the generation phase comprises information regarding an actuator (20, 21, 22, 23, 25) to be controlled and a nominal signal duration (t1, t2) regarding the duration of the control.

12. The method according to one of the preceding claims, wherein at least two control commands are generated in the generation phase and the actuators (20, 21, 22, 23, 25) are controlled in the control phase with the at least two control commands generated in the generation phase at least partially sequentially and/or at least partially simultaneously.

13. The method according to one of the preceding claims, wherein at least two control commands are generated in the generation phase and the actuators (20, 21, 22, 23, 25) are controlled in the control phase with the at least two control commands generated in the generation phase
- at least partially sequentially ordered according to the magnitude of the geometry change when controlling an actuator (20, 21, 22, 23, 25) of the controlled actuators (20, 21, 22, 23, 25), and/or
- at least partially sequentially ordered according to the magnitude of the reduction of the load on the arm system when controlling an actuator (20, 21, 22, 23, 25) of the controlled actuators (20, 21, 22, 23, 25), and/or
- at least partially ordered according to a cost function, and/or
- at least partially simultaneously, wherein a respective signal duration (t1, t2, t3) of the at least two control commands is adjusted to a largest nominal signal duration (t1, t2) of the control commands.

14. The method according to one of the preceding claims, wherein in the presetting phase the lifting device (1) is essentially freely movable with control commands generated by a user via a controller (6) with operating commands for controlling actuators (20, 21, 22, 23, 25) and in the control phase a movement of the lifting device (1) takes place by at least one control command generated by a controller (6) in the generation phase.

15. The method according to one of the preceding claims, wherein in the control phase, a movement of the lifting device (1) is carried out at least partially automatically by outputting the at least one control command generated in the generation phase by a controller (6).

16. A controller (6) for a hydraulic lifting device (1), preferably for a loading crane, which is designed to carry out a method for moving a lifting device (1) according to one of the preceding claims, wherein, by the controller (6)
- in a first operating mode, the presetting phase for presetting at least one target position can be carried out by specifying the geometry of the arm system in at least one target position on the basis of at least one degree of freedom (α, β, ϕ, γ, L, J, H) via a user interface of the controller (6) and/or by controlling actuators (20, 21, 22, 23, 25) and for detecting the instantaneous geometry of the arm system on the basis of at least one degree of freedom (α, β, ϕ, γ, L, J, H),
- in a second operating mode, the measuring phase can be carried out for repeatedly detecting the instantaneous geometry of the arm system on the basis of at least one degree of freedom (α, β, ϕ, γ, L, J, H),
- in a third operating mode, the selection phase can be carried out to select at least one target position preset in the presetting phase,
- in a fourth operating mode, the comparison phase for determining the geometry deviation (Δα, Δβ, Δϕ, Δγ, ΔL, ΔJ, ΔH) can be carried out on the basis of at least one degree of freedom (α, β, ϕ, γ, L, J, H) between the geometry of the at least one target position selected in the selection phase and the instantaneous geometry detected in the measuring phase,
- in a fifth operating mode, the generation phase for generating at least one control command for controlling at least one of the actuators (20, 21, 22, 23, 25) of the lifting device (1) for transferring the arm system of the lifting device (1) from the geometry detected in the measuring phase to the geometry of the at least one target position selected in the selection phase can be carried out with a computing unit (12) of the controller (6) which is configured to this end, and
- in a sixth operating mode, the control phase for - preferably at least partially automated - controlling the actuators (20, 21, 22, 23, 25) of the arm system of the lifting device (1) can be carried out by outputting the at least one control command generated in the generation phase by the controller (6).

17. The controller (6) for a lifting device (1) according to the preceding claim, wherein the controller (6) activates at least one operating element of a user interface in the sixth operating mode for controlling the actuators (20, 21, 22, 23, 25) and by actuating the at least one operating element (17), the geometry of the arm system can be changed at least partially automatically by the controller (6), wherein preferably the controller (6) controls a rate of change of the geometry of the arm system depending on an actuation of the at least one operating element (17) of the user interface.

18. A computer program product, comprising commands which, when executed by the computing unit (12) of the controller (6) according to one of claims 16 or 17, cause the latter to carry out a method according to one of claims 1 to 15 from a memory (11) which is in a data connection with the computing unit (12) or can be brought into such a connection with the same.

19. A data carrier signal that transmits the computer program product according to the preceding claim.

20. A lifting device (1), in particular a loading crane, with an arm system having a plurality of arms (2, 3) movable by actuators (20, 21), wherein the arm system has at least:
- a crane column (2) rotatable about a rotation axis (v1) by a first actuator (20), wherein the arm system has a first degree of freedom (ϕ) due to the pivotable mounting of the crane column (2),
- a main arm (3) that can be pivoted relative to the crane column (2) by means of a second actuator (21), wherein the arm system has a second degree of freedom (α) due to the pivotable mounting of the main arm (3).
and wherein the lifting device (1) has a controller (6) according to one of claims 18 or 19, with which control commands can be output to actuators (20, 21) of the arm system in order to change the geometry of the arm system, wherein an instantaneous geometry of the arm system can be detected by the controller (6) on the basis of sensors (k1, f1) installed on the arm system on the basis of the degrees of freedom (ϕ, α) of the lifting device (1).

## Revendications

1. Procédé de déplacement d'un dispositif de levage (1), de préférence d'une grue de chargement, dans lequel le dispositif de levage (1) présente une commande (6) et un système de bras (2, 3, 4, 5, 7, 8, 18) avec une géométrie pouvant être modifiée par au moins un actionneur (20, 21, 22, 23, 25) le long d'au moins un degré de liberté (α, β, ϕ, γ, L, J, H), **caractérisé en ce que**
- une spécification d'au moins une position cible pour le dispositif de levage (1) est effectuée dans une phase de spécification, dans lequel la spécification est effectuée par une indication de la géométrie du système de bras dans au moins une position cible sur la base de l'au moins un degré de liberté (α, β, ϕ, γ, L, J, H) par l'intermédiaire d'une interface utilisateur de la commande (6) et/ou le dispositif de levage (1) est amené dans au moins une position cible par un pilotage d'actionneurs (20, 21, 22, 23, 25) et une détection de la géométrie instantanée du système de bras est effectuée sur la base de l'au moins un degré de liberté (α, β, ϕ, γ, L, J, H) dans l'au moins une position cible,
- une détection de la géométrie instantanée du système de bras est effectuée sur la base de l'au moins un degré de liberté (α, β, ϕ, γ, L, J, H) dans une phase de mesure,
- une sélection d'au moins une position cible spécifiée dans la phase de spécification est effectuée dans une phase de sélection,
- un écart de géométrie (Δα, Δβ, Δϕ, Δγ, ΔL, ΔJ, ΔH) entre la géométrie de l'au moins une position cible sélectionnée dans la phase de sélection et la géométrie instantanée détectée dans la phase de mesure est défini dans une phase de comparaison par une comparaison des géométrie respective du système de bras sur la base de l'au moins un degré de liberté (α, β, ϕ, γ, L, J, H),
- au moins un ordre de commande, de préférence sous la forme d'au moins une impulsion de commande (p1, p2), pour le pilotage d'au moins un des actionneurs (20, 21, 22, 23, 25) du dispositif de levage (1) pour approcher ou au moins transférer en partie le système de bras du dispositif de levage (1) de la géométrie détectée dans la phase de mesure dans la géométrie de l'au moins une position cible sélectionnée dans la phase de sélection est généré dans une phase de génération sur la base de l'écart de géométrie (Δα, Δβ, Δϕ, Δγ, ΔL, ΔJ, ΔH) défini dans la phase de comparaison, et
- un déplacement au moins partiel du dispositif de levage (1) dans la position cible sélectionnée est effectué dans une phase de pilotage par un pilotage des actionneurs (20, 21, 22, 23, 25) du système de bras avec l'au moins un ordre de commande généré dans la phase de génération.

2. Procédé selon la revendication précédente, dans lequel l'au moins une position cible correspond à une position sensiblement librement sélectionnable du dispositif de levage (1).

3. Procédé selon l'une quelconque des revendications précédentes, dans lequel la géométrie instantanée du dispositif de levage (1) détectée dans la phase de mesure correspond à une géométrie du système de bras différente de la position cible sélectionnée dans la phase de sélection - et de préférence sensiblement librement sélectionnable par un pilotage d'actionneurs (20, 21, 22, 23, 25).

4. Procédé selon l'une quelconque des revendications précédentes, dans lequel la détection d'une géométrie instantanée est effectuée sur la base de données de capteur de capteurs (s1, s2, k1, k2, k3, f1) disposés sur le dispositif de levage (1) pour la mesure d'angle et/ou la mesure de longueur.

5. Procédé selon l'une quelconque des revendications précédentes, dans lequel
- lors de la détection de la géométrie instantanée du système de bras et/ou
- lors de l'indication de la géométrie du système de bras par l'intermédiaire d'une interface utilisateur de la commande (6)
un fléchissement du système de bras est défini sur la base d'un modèle de calcul.

6. Procédé selon l'une quelconque des revendications précédentes, dans lequel
- lors de la détection de la géométrie instantanée du système de bras et/ou
- lors de l'indication de la géométrie du système de bras par l'intermédiaire d'une interface utilisateur de la commande (6)
une inclinaison (λ) du dispositif de levage (1) par rapport à une direction spatiale spécifiée ou pouvant être spécifiée est détectée.

7. Procédé selon l'une quelconque des revendications précédentes, dans lequel
- lors de la détection de la géométrie instantanée du système de bras et/ou
- lors de l'indication de la géométrie du système de bras par l'intermédiaire d'une interface utilisateur de la commande (6)
une position d'au moins un appareil supplémentaire (9, 10, 32) par rapport au système de bras du dispositif de levage (1) et/ou une géométrie de l'au moins un appareil supplémentaire (9, 10, 32) sur la base d'au moins un degré de liberté de la géométrie de l'au moins un appareil supplémentaire (9, 10, 32) sont détectées.

8. Procédé selon l'une quelconque des revendications précédentes, dans lequel l'au moins un ordre de commande est généré pour approcher ou transférer le système de bras du dispositif de levage (1) depuis la géométrie détectée dans la phase de mesure dans une géométrie approchant, dans une plage de tolérance pouvant être spécifiée ou spécifiée, la géométrie de l'au moins une position cible sélectionnée dans la phase de sélection.

9. Procédé selon l'une quelconque des revendications précédentes, dans lequel, dans la phase de génération, ne sont générés que pour des actionneurs (20, 21, 22, 23, 25) des ordres de commande pour lesquels un écart de géométrie (αΔ, Δβ), Δϕ, Δγ, ΔL, ΔJ, ΔH) le long de l'au moins un degré de liberté (α, β, ϕ, γ, L, J, H) correspondant à l'actionneur (20, 21, 22, 23, 25) est défini dans la phase de comparaison.

10. Procédé selon l'une quelconque des revendications précédentes, dans lequel une indication et/ou une détection d'au moins une valeur d'au moins un degré de liberté (α, β, ϕ, γ, L, J, H) de bras du système de bras pouvant être déplacés les uns par rapport aux autres le long de l'au moins un degré de liberté (α, β, ϕ, γ, L, J, H) sont effectuées dans la phase de spécification, une détection répétée d'au moins une valeur d'au moins un degré de liberté (α, β, ϕ, γ, L, J, ΔH) est effectuée dans la phase de mesure et, dans la phase de comparaison, la définition de l'écart géométrique (α, Δβ, Δϕ, Δγ, ΔL, ΔJ, ΔH) est effectuée par la définition d'un écart de l'au moins une valeur sélectionnée en conséquence dans la phase de sélection et indiquée et/ou détectée dans la phase de spécification par rapport à l'au moins une valeur détectée dans la phase de mesure.

11. Procédé selon l'une quelconque des revendications précédentes, dans lequel l'au moins un ordre de commande généré dans la phase de génération comprend des informations sur un actionneur (20, 21, 22, 23, 25) à piloter et une durée nominale de signal (t1, t2) par rapport à la durée du pilotage.

12. Procédé selon l'une quelconque des revendications précédentes, dans lequel au moins deux ordres de commande sont générés dans la phase de génération et un pilotage des actionneurs (20, 21, 22, 23, 25) est effectué au moins en partie de manière séquentielle et/ou au moins au moins en partie simultanément dans la phase de pilotage avec les au moins deux ordres de commande générés dans la phase de génération.

13. Procédé selon l'une quelconque des revendications précédentes, dans lequel au moins deux ordres de commande sont générés dans la phase de génération et, dans la phase de pilotage avec les au moins deux ordres de commande générés dans la phase de génération, un pilotage des actionneurs (20, 21, 22, 23, 25) est effectué
- au moins en partie de manière séquentielle de manière ordonnée selon l'ampleur de la modification de géométrie lors du pilotage d'un actionneur (20, 21, 22, 23, 25) des actionneurs (20, 21, 22, 23, 25) pilotés, et/ou
- au moins en partie de manière séquentielle de manière ordonnée selon l'ampleur de la réduction de la portée du système de bras lors du pilotage d'un actionneur (20, 21, 22, 23, 25) des actionneurs (20, 21, 22, 23, 25) pilotés, et/ou
- au moins en partie de manière ordonnée selon une fonction de coûts, et/ou
- au moins en partie simultanément, dans lequel une durée de signal (t1, t2, t3) respective des au moins deux ordres de commande est adaptée à une durée de signal nominale la plus grande (t1, t2) des ordres de commande.

14. Procédé selon l'une quelconque des revendications précédentes, dans lequel, dans la phase de spécification, le dispositif de levage (1) peut être déplacé sensiblement librement avec des ordres de commande générés par un utilisateur par l'intermédiaire d'une commande (6) avec des ordres d'utilisation pour un pilotage d'actionneurs (20, 21, 22, 23, 25) et, dans la phase de pilotage, un déplacement du dispositif de levage (1) est effectué par au moins un ordre de commande généré par une commande (6) dans la phase de génération.

15. Procédé selon l'une quelconque des revendications précédentes, dans lequel, dans la phase de pilotage, un déplacement du dispositif de levage (1) est effectué au moins de manière partiellement automatisée par une commande (6) par l'émission de l'au moins un ordre de commande généré dans la phase de génération.

16. Commande (6) pour un dispositif de levage (1) hydraulique, de préférence pour une grue de chargement, pour mettre en œuvre un procédé de déplacement d'un dispositif de levage (1) selon l'une quelconque des revendications précédentes, dans laquelle la commande (6) peut mettre en œuvre
- dans un premier mode de fonctionnement, la phase de spécification pour la spécification d'au moins une position cible par une indication de la géométrie du système de bras dans au moins une position cible sur la base de l'au moins un degré de liberté (α, β, ϕ, γ, L, J, H) par l'intermédiaire d'une interface utilisateur de la commande (6) et/ou par un pilotage d'actionneurs (20, 21, 22, 23, 25) et pour la détection de la géométrie momentanée du système de bras sur la base d'au moins un degré de liberté (α, β, ϕ, γ, L, J, H),
- dans un deuxième mode de fonctionnement, la phase de mesure pour la détection répétée de la géométrie instantanée du système de bras sur la base d'au moins un degré de liberté (α, β, ϕ, γ, L, J, H),
- dans un troisième mode de fonctionnement, la phase de sélection pour la sélection d'au moins une position cible spécifiée dans la phase de spécification,
- dans un quatrième mode de fonctionnement, la phase de comparaison pour la définition de l'écart de géométrie (Δα, Δβ, Δϕ, Δγ, ΔL, ΔJ, ΔH) sur la base d'au moins un degré de liberté (α, β, ϕ, γ, L, J, H) entre la géométrie de l'au moins une position cible sélectionnée dans la phase de sélection et la géométrie instantanée détectée dans la phase de mesure,
- dans un cinquième mode de fonctionnement, la phase de génération pour la génération d'au moins un ordre de commande pour le pilotage d'au moins un des actionneurs (20, 21, 22, 23, 25) du dispositif de levage (1) pour le transfert du système de bras du dispositif de levage (1) de la géométrie détectée dans la phase de mesure dans la géométrie de l'au moins une position cible sélectionnée dans la phase de sélection avec une unité de calcul (12) de la commande (6) configurée à cet effet, et
- dans un sixième mode de fonctionnement, la phase de pilotage pour le pilotage - de préférence au moins en partie automatisé - des actionneurs (20, 21, 22, 23, 25) du système de bras du dispositif de levage (1) par l'émission de l'au moins un ordre de commande générée dans la phase de génération par la commande (6).

17. Commande (6) pour un dispositif de levage (1) selon la revendication précédente, dans laquelle la commande (6) active au moins un élément d'utilisation d'une interface utilisateur dans le sixième mode de fonctionnement pour piloter les actionneurs (20, 21, 22, 23, 25) et la géométrie du système de bras peut être modifiée au moins de manière partiellement automatisée par la commande (6) par l'actionnement de l'au moins un élément d'utilisation (17), dans laquelle de préférence la commande (6) commande un taux de modification de la géométrie du système de bras en fonction d'un actionnement de l'au moins un élément d'utilisation (17) de l'interface utilisateur.

18. Produit-programme d'ordinateur comprenant des instructions, qui, lors d'une exécution par l'unité de calcul (12) de la commande (6) selon l'une quelconque des revendications 16 ou 17, amènent celle-ci à exécuter un procédé selon l'une quelconque des revendications 1 à 15 depuis la mémoire (11) de la commande (12), laquelle est en liaison de données ou peut être amenée dans une liaison de données avec l'unité de calcul (12).

19. Signal de support de données qui est transmis par le produit-programme d'ordinateur selon la revendication précédente.

20. Dispositif de levage (1), en particulier grue de chargement, avec un système de bras présentant des bras (2, 3) pouvant être déplacés par des actionneurs (20, 21), dans lequel le système de bras présente au moins :
- une colonne de grue (2) pouvant tourner autour d'un axe de rotation (v1) avec un premier actionneur (20), dans lequel le système de bras présente un premier degré de liberté (ϕ) par le montage pivotant de la colonne de grue (2),
- un bras principal (3) pouvant pivoter avec un deuxième actionneur (21) par rapport à la colonne de grue (2), dans lequel le système de bras présente un deuxième degré de liberté (α) par le montage pivotant du bras principal (3)
et dans lequel le dispositif de levage (1) présente une commande (6) selon l'une quelconque des revendications 16 ou 17, avec laquelle des ordres de commande peuvent être envoyés à des actionneurs (20, 21) du système de bras pour modifier la géométrie du système de bras, dans lequel une géométrie instantanée du système de bras sur la base des degrés de liberté (ϕ, α) du dispositif de levage (1) peut être détectée par la commande (6) sur la base de capteurs (k1, f1) installés sur le système de bras.
